# EUROPEAN PATENT APPLICATION

(11) **EP 4 621 604 A1**
(43) Date of publication of application: **24.09.2025**
(21) Application number: 25162864.0
(22) Date of filing: 11.03.2025
(51) Int. Cl.: G06F 16/9535

(54) **SEARCH SYSTEM, SEARCH METHOD, AND CARRIER MEANS**

(30) Priority: 22.03.2024 JP 2024046003; 06.12.2024 JP 2024214047
(71) Applicant: Ricoh Company, Ltd., Tokyo 143-8555 (JP)
(72) Inventor: OBATA, Yuzo, Tokyo, 143-8555 (JP)
(74) Representative: SSM Sandmair

(57) **Abstract**

A search system includes an input reception unit, a first search target information display unit, and a first additional information input unit. The input reception unit receives input data including a request from a user. The first search target information display unit display, as search target information, one or more search target candidates satisfying a search condition among search targets. The one or more search target candidates are acquired by searching a database of the search targets in the search system by using the received input data as the search condition. The first additional information input unit receives, as an input, first additional information based on first input information of the one or more search target candidates. The first additional information includes an additional search condition that differs according to a search target candidate selected from among the one or more search target candidates.

## Description

### BACKGROUND

### Technical Field

The present disclosure relates to a search system, a search method, and carrier means.

### Related Art

A business entity (an example of a user) having original content such as unique design may have insufficient resources for print production of goods. In this case, the business entity wishes to match printing service providers (an example of search targets). There has been available no order transaction system for supporting matching between a business entity and a printing service provider in such a way that their respective strengths and weaknesses complement one another.

Each business's store has limited facilities, considering space, investment, and labor costs. For this reason, there are cases where businesses use outsourcing to scale their operations. However, it takes time for a client to select an outsourcing partner (an example of a search target) in order to avoid making a request to an unreliable one when the client itself selects an outsourcing partner.

Japanese Unexamined Patent Application Publication No. 2004-265348 discloses a system for allowing a customer to mechanically select a function or a product from a menu table prepared in advance and customize the selected function or product before placing an order. The disclosed system is not based on the idea of matching between business entities.

Japanese Unexamined Patent Application Publication No. 2002-150033 discloses a system that encourages a creator to enter a design competition with their works and mediates conventional requests from a customer to the creator. In the disclosed system, at the time of creation or order placement of a final print product desired by the customer (e.g., a company), no matching is performed between the creator and a printing service provider, and the printing service provider is not requested to create the final print product.

A technique disclosed in Japanese Unexamined Patent Application Publication No. 2013-196249 does not involve matching customers (e.g., companies) to complement each other in terms of designing and print production.

### SUMMARY

According to an embodiment of the present disclosure, a search system includes an input reception unit, a first search target information display unit, and a first additional information input unit. The input reception unit receives input data including a request from a user. The first search target information display unit display, as search target information, one or more search target candidates satisfying a search condition among search targets. The one or more search target candidates are acquired by searching a database of the search targets in the search system by using the received input data as the search condition. The first additional information input unit receives, as an input, first additional information based on first input information of the one or more search target candidates. The first additional information includes an additional search condition that differs according to a search target candidate selected from among the one or more search target candidates.

According to an embodiment of the present disclosure, a search method includes receiving input data including a request from a user; displaying, as search target information, one or more search target candidates satisfying a search condition among search targets, the one or more search target candidates being acquired by searching a database of the search targets in a search system by using the received input data as the search condition; and receiving, as an input, first additional information based on first input information of the one or more search target candidates, the first additional information including an additional search condition that differs according to a search target candidate selected from among the one or more search target candidates.

According to an embodiment of the present disclosure, carrier means carries computer readable code for controlling a computer system to carry out the above-described method.

The configuration described above allows a search for a search target with an emphasis on a request from a user.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of the general arrangement of a product production and sales system including a production management system;
FIG. 2 is a diagram illustrating an example hardware configuration of a computer;
FIG. 3 is a hardware configuration diagram illustrating an example of a direct-to-garment (DTG) printer;
FIG. 4 is a functional block diagram illustrating an example of functions of the product production and sales system;
FIG. 5A is a diagram illustrating an example of order information;
FIG. 5B is a diagram illustrating an example of a manufacturer selection process performed by the production management system;
FIG. 5C is a sequence diagram illustrating an example of a second-stage matching flow, which is performed by the production management system;
FIG. 6 is a diagram illustrating an example of a table of profile information of a manufacturer;
FIG. 7 is a diagram illustrating an example of a table of device information;
FIG. 8 is a diagram illustrating an example of a transition of a production management screen viewable to an order requester;
FIG. 9A is a diagram illustrating an example of a production request;
FIG. 9B is a functional block diagram illustrating an example of functions of a search system applied to an electronic commerce (EC) site;
FIG. 10 is a diagram illustrating the general arrangement of a product sales system according to a first embodiment;
FIG. 11 is a diagram illustrating an example of a product search process performed by the product sales system according to the first embodiment;
FIG. 12 is a diagram illustrating an example of a human resources search process performed by a human resources matching system according to the first embodiment;
FIG. 13 is a diagram illustrating an example of a human resources search process performed by a human resources matching system (a human resources matching system that allows a company to search for mid-career professionals) according to the first embodiment;
FIG. 14 is a diagram illustrating an example of a real estate search process performed by a real estate search system according to the first embodiment;
FIG. 15A is a diagram illustrating an example of a product candidate display process based on a first search process performed by the product sales system according to the first embodiment;
FIG. 15B is a diagram illustrating an example of the product candidate display process based on the first search process performed by the product sales system according to the first embodiment;
FIG. 15C is a diagram illustrating an example of the product candidate display process based on the first search process performed by the product sales system according to the first embodiment;
FIG. 16 is a diagram illustrating an example of a product candidate search process based on a second search process performed by the product sales system according to the first embodiment;
FIG. 17A is a diagram illustrating an example of the product candidate search process based on the second search process performed by the product sales system according to the first embodiment;
FIG. 17B is a diagram illustrating an example of a screen for a shoe candidate search process based on the second search process performed by the product sales system according to the first embodiment;
FIG. 17C is a diagram illustrating another example of the screen for the shoe candidate search process based on the second search process performed by the product sales system according to the first embodiment;
FIG. 17D is a diagram illustrating another example of the screen for the shoe candidate search process based on the second search process performed by the product sales system according to the first embodiment;
FIG. 18 is a diagram illustrating an example of a product candidate search process based on a third search process performed by the product sales system according to the first embodiment;
FIG. 19 is a diagram illustrating an example of the product candidate search process based on the third search process performed by the product sales system according to the first embodiment;
FIG. 20A is a diagram illustrating an example of the product candidate search process based on the third search process performed by the product sales system according to the first embodiment;
FIG. 20B is a diagram illustrating an example of a screen for a shoe candidate search process based on the third search process performed by the product sales system according to the first embodiment;
FIG. 20C is a diagram illustrating an example of the screen for the shoe candidate search process based on the third search process performed by the product sales system according to the first embodiment;
FIG. 20D is a diagram illustrating an example of the screen for the shoe candidate search process based on the third search process performed by the product sales system according to the first embodiment;
FIG. 20E is a diagram illustrating another example of the screen for the shoe candidate search process based on the third search process performed by the product sales system according to the first embodiment;
FIG. 21 is a diagram illustrating an example of a real estate candidate display process based on a first search process performed by the real estate search system according to the first embodiment;
FIG. 22 is a diagram illustrating an example of a real estate candidate search process based on a second search process performed by the real estate search system according to the first embodiment;
FIG. 23A is a diagram illustrating an example of the real estate candidate search process based on the second search process performed by the real estate search system according to the first embodiment;
FIG. 23B is a diagram illustrating an example of a screen for the real estate candidate search process based on the second search process performed by the real estate search system according to the first embodiment;
FIG. 23C is a diagram illustrating another example of the screen for the real estate candidate search process based on the second search process performed by the real estate search system according to the first embodiment;
FIG. 23D is a diagram illustrating another example of the screen for the real estate candidate search process based on the second search process performed by the real estate search system according to the first embodiment;
FIG. 24 is a diagram illustrating an example of a real estate candidate search process based on a third search process performed by the real estate search system according to the first embodiment;
FIG. 25 is a diagram illustrating an example of the real estate candidate search process based on the third search process performed by the real estate search system according to the first embodiment;
FIG. 26A is a diagram illustrating an example of the real estate candidate search process based on the third search process performed by the real estate search system according to the first embodiment;
FIG. 26B is a diagram illustrating an example of the real estate candidate search process based on the third search process performed by the real estate search system according to the first embodiment;
FIG. 26C is a diagram illustrating an example of a screen for the real estate candidate search process based on the third search process performed by the real estate search system according to the first embodiment;
FIG. 26D is a diagram illustrating another example of the screen for the real estate candidate search process based on the third search process performed by the real estate search system according to the first embodiment;
FIG. 26E is a diagram illustrating another example of the screen for the real estate candidate search process based on the third search process performed by the real estate search system according to the first embodiment;
FIG. 27 is a diagram illustrating an example of a real estate candidate search process performed by the real estate search system according to the first embodiment;
FIG. 28 is a diagram illustrating an example of the real estate candidate search process performed by the real estate search system according to the first embodiment;
FIG. 29 is a diagram illustrating an example of an employer candidate display process based on a first search process performed in a human resources matching service according to the first embodiment;
FIG. 30 is a diagram illustrating an example of an employer candidate search process based on a second search process performed in the human resources matching service according to the first embodiment;
FIG. 31 is a diagram illustrating an example of the employer candidate search process based on the second search process performed in the human resources matching service according to the first embodiment; and
FIG. 32 is a diagram illustrating an example of an employer candidate search process based on a third search process performed in the human resources matching service according to the first embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A product production and sales system to which a search system, a customer selection system, a search method, and a program are applied will be described in detail hereinafter with reference to the accompanying drawings.

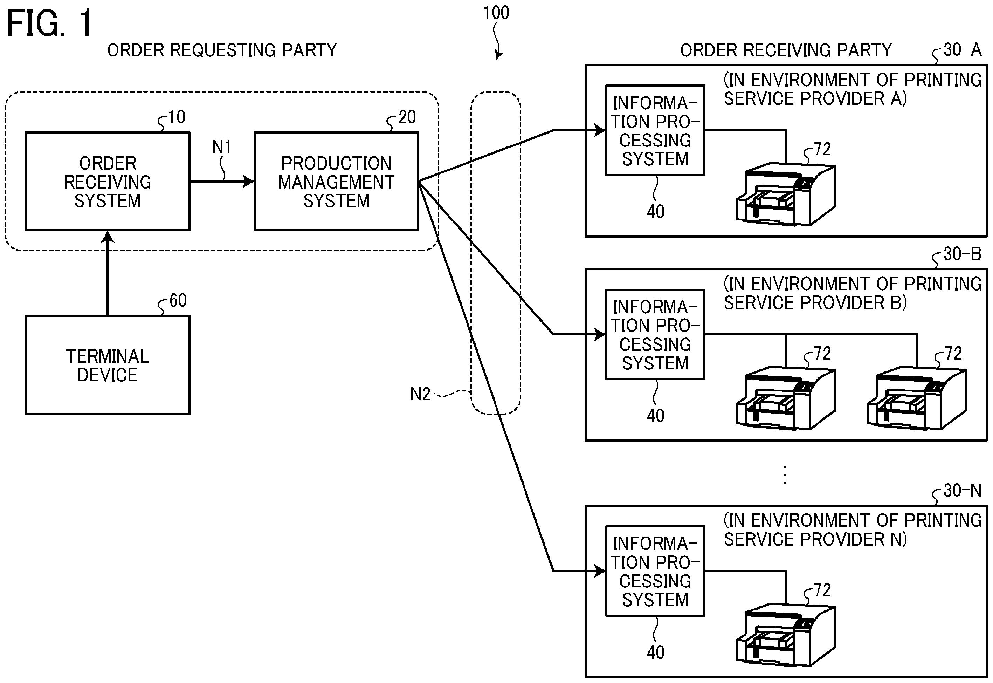

FIG. 1 is a diagram illustrating an example of the general arrangement of a product production and sales system 100 including a production management system. The product production and sales system 100 is an example of a search system that selects (or searches for) a manufacturer (an example of a search target) that matches a request for a production job (an example of a request) from a purchaser (an example of a user). An embodiment describes an example in which the search system is applied to a product production and sales system. However, the search system may also be applied to a human resources matching site, an EC site, or other sites. The product production and sales system 100 may be an example of a customer selection system that allows a product manufacturer or a service provider (an example of a user) to select a customer (an example of a search target) that matches content (an example of a request) of a product to be manufactured by the product manufacturer or a service to be provided by the service provider. In other words, the product production and sales system 100 may be an example of a customer selection system that allows a contractor to select a customer that matches an order received by the contractor.

As illustrated in FIG. 1, the product production and sales system 100 includes an order receiving system 10 that receives order information, a production management system 20, and information processing systems 40 disposed in production site systems 30 (30-A, 30-B, ..., and 30-N). The order receiving system 10 and the production management system 20 are communicably connected to each other via a network N1. The production site systems 30 are installed in production sites of multiple manufacturers. In general, the order information is transmitted from the order receiving system 10 to the production site systems 30 of the manufacturers via the production management system 20. The manufacturers include, for example, a creator responsible for designing a product to be produced.

The network N1 is a wide area network (WAN) such as the Internet. The network N1 may include, for example, a wide area Ethernet^{®} or a virtual private network (VPN). The network N1 may be a wired or wireless network, or a combination of wired and wireless networks. The network N1 may include a wireless communication network such as a third generation (3G), fourth generation (4G), or fifth generation (5G) network. In each of the production sites, a network N2 such as a local area network (LAN), a wireless fidelity (Wi-Fi) network, or a WAN is installed.

A terminal device 60 is an information processing terminal operated by a purchaser who places an order on the order receiving system 10 or a manufacturer serving as an order requester in the production management system 20. The terminal device 60 may be, for example, a desktop personal computer (PC), a notebook PC, a smartphone, a tablet terminal, or the like, which operates on the general operating system (OS) such as Windows^{®}, MAC^{®} OS, Android^{®}, or iOS^{®}. In addition, the terminal device 60 may be any information processing terminal on which a web browser or a native application operates and that can communicate with the order receiving system 10.

The order receiving system 10 is implemented by one or more information processing apparatuses. The order receiving system 10 is used for, for example, an electronic commerce (EC) site. When the purchaser accesses the EC site using the terminal device 60, the order receiving system 10 provides the terminal device 60 with a screen on which a list of products (e.g., apparel products) to be produced is displayed. The order receiving system 10 receives order information of an apparel product selected by the purchaser operating the terminal device 60. The activity of sale of products to be produced through an EC site is called electronic commerce (e-commerce). One or more order receiving systems 10 may exist.

Each order receiving system 10 places an order to the production management system 20 corresponding to a product to be produced. For convenience of description, the product to be produced according to the present embodiment is an apparel product such as a T-shirt. However, the product to be produced may be, for example, bottoms, tops, underwear, shoes, a hat, or a bag, and is not limited thereto. The order receiving system 10 may receive an order for a product to be produced using a three-dimensional (3D) printer as well as a two-dimensional printer.

It is anticipated that a manufacturer serving as an order requester that uses the production management system 20 according to the present embodiment does not have, for example, a factory for production, or has no more than a small-scale factory for production. For this reason, the production management system 20 requests the production site system 30 of another manufacturer to produce the apparel product that is a product to be produced.

The production management system 20 includes one or more information processing apparatuses that receive order information of the apparel product and place an order for the apparel product to the production site system 30 (i.e., the information processing system 40) in the production site owned by the other manufacturer. The production management system 20 displays profile information of manufacturers owning production sites, and allows the order requester to view the profile information and request a production site of a desired manufacturer to produce the apparel product. The configuration of the production management system 20 will be described in detail below.

In the production management system 20, profile information and device information of each manufacturer are updated as appropriate and stored.

A system including the information processing system 40 disposed in each production site is referred to as the production site system 30. The production site system 30 includes one or more information processing systems 40 for receiving order information from the production management system 20 and various types of production equipment. In a case where the product to be produced is an apparel product, examples of the production equipment include one or more direct-to-garment (DTG) printers 72, a cutting machine, and a sewing machine. In FIG. 1, DTG printers 72 are illustrated. In the following description, any one of the DTG printers 72 is referred to as a DTG printer 72. The production equipment included in the production site system 30 is not limited to these pieces of equipment described above, and may include any other pieces of equipment that handle the product to be produced. In the present embodiment, in each of the production site systems 30, one or more DTG printers 72 are connected to the information processing system 40.

The information processing system 40 may be, for example, a desktop PC, a notebook PC, a smartphone, a tablet terminal, or the like, which operates on the general OS such as Windows^{®}, MAC^{®} OS, Android^{®}, or iOS^{®}. In addition, the information processing system 40 may be any information processing terminal on which a web browser or a native application operates and that can communicate with the production management system 20.

The information processing system 40 and the production management system 20 operate in cooperation with each other, for example, as a client-server system. In this case, the production management system 20 has the functions of a web server. The web server transmits various types of information such as a Hypertext Markup Language (HTML) document residing on the web server in accordance with the Hypertext Transfer Protocol (HTTP) specification, based on a uniform resource locator (URL) specified by a web browser serving as the client. Communication between the web browser and the web server enables a web application to be executed. The web application is an application that operates through the cooperation of a program on the web browser and a program on the web server. The program on the web browser may be a program written in a programming language for web browsers, such as JavaScript^{®}. In contrast, an application that is not executed unless installed in the information processing system 40 is referred to as a native application. In the present embodiment, the applications executed by the information processing system 40 may be native applications.

The DTG printer 72 is an image forming apparatus used to draw a design on an apparel product, which is a product to be produced, by screen printing, inkjet printing, or the like. The DTG printer 72 may employ any printing method as long as the DTG printer 72 has a function of drawing a design on, for example, an apparel product. The DTG printer 72 may be a 3D printer.

The DTG printer 72 uses optimal settings such as ink, droplet size, temperature, and ejection control, which differ depending on the fabric of the apparel product used, which is a product to be produced. For example, a plurality of models of DTG printers 72 for textiles such as cotton and polyester are prepared at each production site. Even DTG printers 72 for printing on the same material may use different colors, dot per inch (dpi) settings, and other settings depending on apparel products, and a DTG printer 72 optimal for an apparel product to be handled may be prepared. In addition, a plurality of DTG printers 72 of the same model may be prepared to enable parallel printing.

In a case where the DTG printer 72 is a 3D printer, the optimal material and method for designing a product to be produced, the optimal machine size, the optimal machine specifications, and the like vary depending on the application and shape of the product. Some 3D printers include a single extruder, and other 3D printers include a plurality of extruders. The extruder is a mechanism for melting a resin material to be used in 3D printing and feeding the melted resin material. A 3D printer including a plurality of extruders is suitable for creating a shaped object whose material or properties are partially changed.

The 3D printer is not limited to an extruder printer, and may be an inkjet printer. Examples of materials used by the 3D printer include liquid materials such as photocurable resins and liquid metals, powder materials such as gypsum and sand, biomaterials, and plastics. Any material available for 3D printers, other than the materials described above, may be used. Selection of a suitable 3D printer depends on the size of a shaped object, and the suitable 3D printer varies depending on the accuracy at the completion of the shaped object.

As described above, 3D printers having various specifications are prepared at the respective production sites. A plurality of 3D printers of the same model may be prepared to enable parallel modeling. Additionally or alternatively, 3D printers having various specifications may be prepared at one production site.

The terminal device 60 registers, in the production management system 20, profile information of each manufacturer responsible for managing a production site and creating a product to be produced.

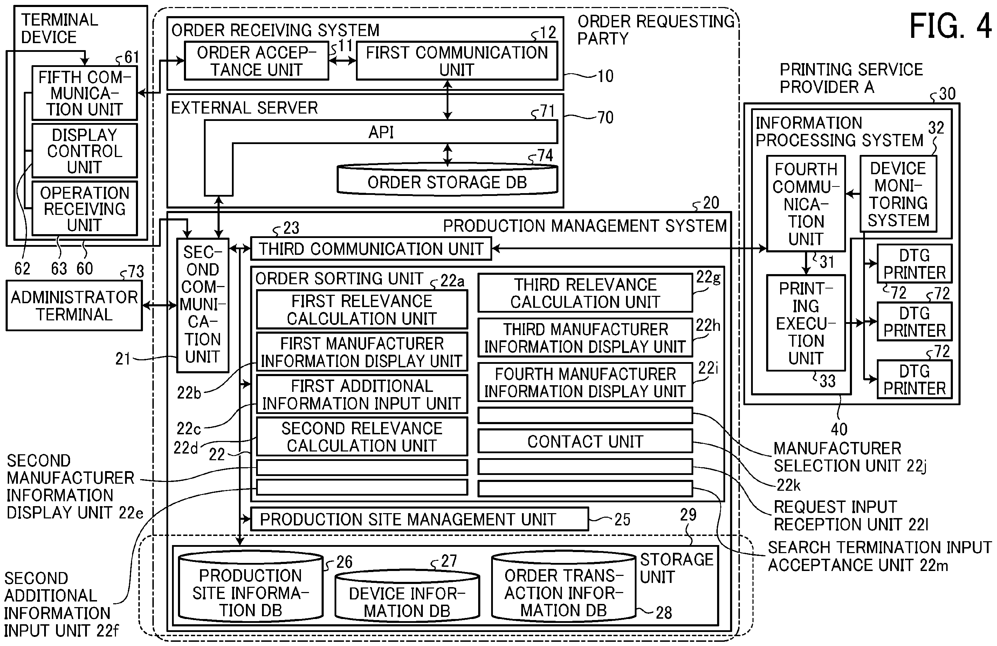

The information processing system 40 manages device information and provides the device information to the production management system 20. For example, the information processing system 40 uses a device monitoring system 32 (see FIG. 4) described below or the like to acquire the operating status of one or more DTG printers 72 used by the manufacturer, and reflects the acquired operating status in the device information.

The production management system 20 may communicate with a delivery system or an infrastructure information system in addition to the systems illustrated in FIG. 1. In one example, the delivery system is a system of a transport company. The delivery system delivers (collects and ships) an apparel product based on the delivery destination of the apparel product, which is input from the information processing system 40. The infrastructure information system manages, for example, purchasers, order reception, delivery, deposit, and payment.

The order receiving system 10 and the production management system 20 may reside either in the cloud or on-premises. In FIG. 1, the information processing system 40 is installed on-premises. In another example, the information processing system 40 is installed in the cloud. The order receiving system 10 and the production management system 20 may be integrated with each other. The production management system 20 may include a plurality of information processing apparatuses in which the functions of the production management system 20 are distributed, or a plurality of production management systems 20 may exist.

### Hardware Configuration

### Order Receiving system, Production Management System, Information Processing System, and Terminal Device

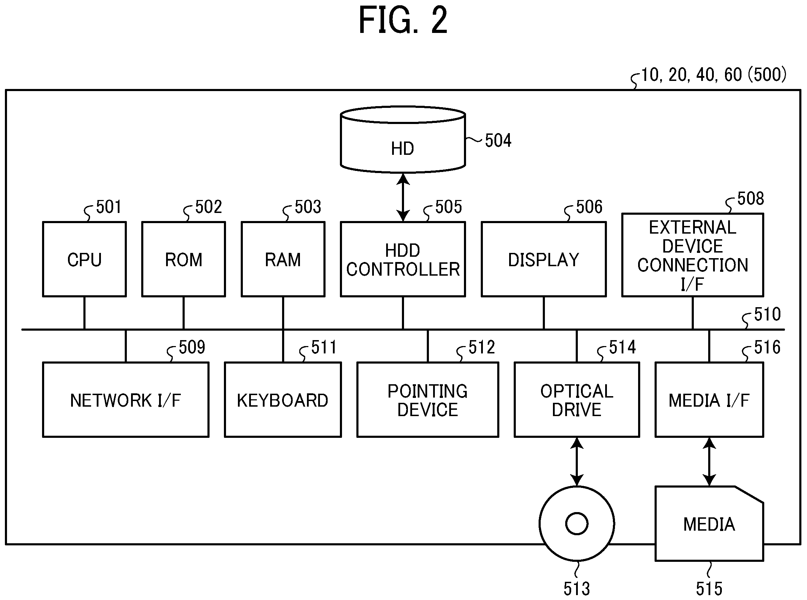

As illustrated in FIG. 2, the order receiving system 10, the production management system 20, the information processing system 40, and the terminal device 60 each have a configuration of a computer 500. FIG. 2 is a diagram illustrating an example hardware configuration of the computer 500. As illustrated in FIG. 2, the computer 500 is implemented by a computer. As illustrated in FIG. 2, the computer 500 includes a central processing unit (CPU) 501, a read only memory (ROM) 502, a random access memory (RAM) 503, a hard disk (HD) 504, a hard disk driver (HDD) controller 505, a display 506, an external device connection interface (I/F) 508, a network I/F 509, a bus line 510, a keyboard 511, a pointing device 512, an optical drive 514, and a media I/F 516.

The CPU 501 controls the overall operations of the computer 500 (i.e., the order receiving system 10, the production management system 20, the information processing system 40, and the terminal device 60). The ROM 502 stores programs such as an initial program loader (IPL) used to boot the CPU 501. The RAM 503 is used as a work area for the CPU 501. The HD 504 stores various types of data such as a program. The HDD controller 505 controls reading or writing of various types of data from or to the HD 504 under control of the CPU 501. The display 506 displays various types of information such as a cursor, a menu, a window, text, or an image. The external device connection I/F 508 is an interface for connecting to various external devices. The external devices include, for example, but not limited to, a universal serial bus (USB) memory and various printers. The network I/F 509 is an interface for performing data communication using a communication network. The bus line 510 is, for example, an address bus or a data bus for electrically connecting the components illustrated in FIG. 2, such as the CPU 501, to one another.

The keyboard 511 serves as an input means including a plurality of keys to be used for inputting, for example, characters, numerical values, and various instructions. The pointing device 512 serves as an input means to be used for, for example, selecting or executing various kinds of instructions, selecting a target for processing, or moving a cursor being displayed. The optical drive 514 controls reading or writing of various types of data from or to an optical storage medium 513, which serves as a removable recording medium. Examples of the optical storage medium 513 include, but are not limited to, a compact disc (CD), a digital versatile disc (DVD), and a Blu-ray^{®} disc. The media I/F 516 controls reading or writing (storing) of data from or to recording media 515 such as a flash memory.

### Printer

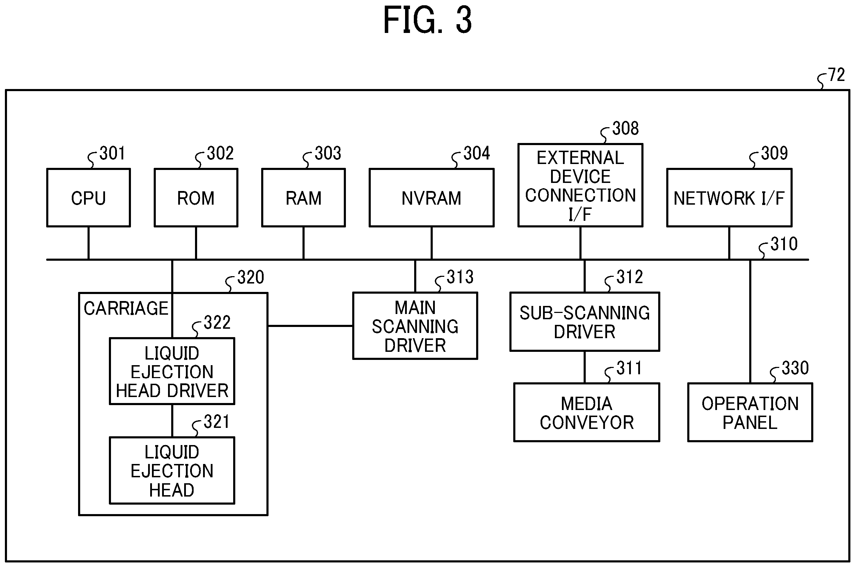

FIG. 3 is a hardware configuration diagram illustrating an example of each of the DTG printers 72 (inkjet printers). As illustrated in FIG. 3, the DTG printer 72 includes a CPU 301, a ROM 302, a RAM 303, a non-volatile random access memory (NVRAM) 304, an external device connection I/F 308, a network I/F 309, and a bus line 310. The DTG printer 72 further includes a media conveyor 311, a sub-scanning driver 312, a main scanning driver 313, a carriage 320, and an operation panel 330. The carriage 320 includes a liquid ejection head 321 and a liquid ejection head driver 322.

The CPU 301 controls the overall operation of the DTG printer 72. The ROM 302 stores programs and the like used to boot the CPU 301, such as an IPL. The RAM 303 is used as a work area for the CPU 301. The NVRAM 304 stores various types of data such as a program such that the data is kept stored even while the power to the DTG printer 72 is off. The external device connection I/F 308 is connected to a PC via a USB cable or the like, and communicates with the PC to transmit or receive control signals and data to be printed. The network I/F 309 is an interface for performing data communication using a communication network such as the Internet. The bus line 310 is, for example, an address bus or a data bus for electrically connecting the components such as the CPU 301 to one another.

The media conveyor 311 includes, for example, a roller and a motor that drives the roller. The media conveyor 311 conveys an output medium in the sub-scanning direction along a conveyance path in the DTG printer 72. The sub-scanning driver 312 controls the media conveyor 311 to move in the sub-scanning direction. The main scanning driver 313 controls the carriage 320 to move in the main scanning direction.

The liquid ejection head 321 of the carriage 320 has a plurality of nozzles for ejecting a liquid such as ink, and is mounted on the carriage 320 such that an ejection surface (nozzle surface) of the liquid ejection head 321 faces the output medium. The liquid ejection head 321, while moving in the main scanning direction, ejects the liquid onto the output medium intermittently conveyed in the sub-scanning direction to eject the liquid at a predetermined position on the output medium to form an image. The liquid ejection head driver 322 is a driver for controlling the driving of the liquid ejection head 321.

The operation panel 330 includes, for example, a touch panel and one or more alarm lamps. The touch panel displays current settings, a selection screen, or the like and receives user input.

In one example, the liquid ejection head driver 322 is not mounted on the carriage 320, and is connected to the liquid ejection head 321 via the bus line 310. The functions of the main scanning driver 313, the sub-scanning driver 312, and the liquid ejection head driver 322 may be implemented by the CPU 301 that operates according to the respective programs. Functions

FIG. 4 is a functional block diagram illustrating an example of functions of the product production and sales system 100.

### Terminal Device

The terminal device 60 includes a fifth communication unit 61, a display control unit 62, and an operation receiving unit 63. These functions of the terminal device 60 are functions or means implemented by any one of the hardware components illustrated in FIG. 2 operating in accordance with instructions from the CPU 501 according to a program (web browser or native application) loaded onto the RAM 503 from the HD 504.

The fifth communication unit 61 communicates with the order receiving system 10 and receives screen information for displaying a screen of an EC site on the terminal device 60. Further, the fifth communication unit 61 transmits order information input to each screen by a purchaser to the order receiving system 10.

The fifth communication unit 61 further communicates with the production management system 20 and receives, as screen information to be displayed on the terminal device 60, a screen on which an order requester makes a request to place an order for a product to be produced.

The display control unit 62 analyzes screen information of a screen received from the order receiving system 10 or screen information of a screen received from the production management system 20 and displays the analyzed screen information on the display 506. The operation receiving unit 63 receives an operation performed on the terminal device 60 by the purchaser (e.g., input of order information to each screen) or an operation performed on the terminal device 60 by the order requester (e.g., input of supplier selection information to each screen).

### Order Receiving System

The order receiving system 10 includes an order acceptance unit 11 and a first communication unit 12. These functions of the order receiving system 10 are functions or means implemented by any one of the hardware components illustrated in FIG. 2 operating in accordance with instructions from the CPU 501 according to a program loaded onto the RAM 503 from the HD 504.

The order acceptance unit 11 provides an EC site, and receives order information of an apparel product purchased by the purchaser via the web browser operating on the terminal device 60 operated by the purchaser.

The EC site accepts an order through a web application implemented through the cooperation of programs executed on the web server and the web browser. The order acceptance unit 11 creates screen information of a screen to be displayed by the web browser. The screen information is a program described in HTML, Extensible Markup Language (XML), a script language, Cascading Style Sheet (CSS), and the like. The structure of a web page is mainly specified by HTML, the operation of the web page is defined by a script language, and the style of the web page is specified by CSS.

Instead of the web application, a native application for purchasing an apparel product, which is a product to be produced, may operate on the terminal device 60. In this case, the configuration of the screen is included in the native application, and the content to be displayed is transmitted from the order receiving system 10 to the terminal device 60 in XML or the like.

The first communication unit 12 transmits order information to an external server 70 each time an order is received. This configuration allows the first communication unit 12 to transmit the order information of the apparel product, which is an ordered product to be produced, to the external server 70 immediately after the order is received.

The external server 70 stores the order information transmitted from the order receiving system 10 in an order storage DB 74 via an application programming interface (API) 71. Further, the external server 70 transmits the order information stored in the order storage DB 74 to the production management system 20 via the API 71.

In the present embodiment, the order receiving system 10 stores order information in the external server 70. In another embodiment, order information may be stored in the HD 504 or the like of the order receiving system 10.

### Order Information

Order information will be described.

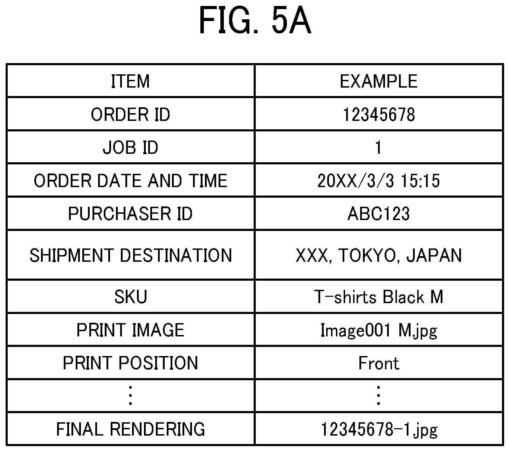

FIG. 5A is a diagram illustrating an example of order information. The order information is information related to an order for an apparel product, which is a product to be produced. As illustrated in FIG. 5A, the order information includes, for example, an order ID, a job ID, an order date and time, a purchaser ID, a shipment destination, a stock keeping unit (SKU), a print image, a print position, and a final rendering. The shipment destination, the SKU, and the print position in the order information are determined by the purchaser and are transmitted from the order receiving system 10. In one example, identification information of the print image is transmitted from the order receiving system 10. In another example, the print image itself is transmitted from the order receiving system 10.

The order ID is identification information for uniquely identifying an order. ID is an abbreviation for identification and means an identifier or identification information. ID is any one or a combination of two or more of a name, a symbol, a character string, and a numerical value that are used for uniquely identifying a specific object from among a plurality of objects. The order acceptance unit 11 assigns an order ID. When a plurality of apparel products are ordered by a single order and are to be shipped to the same location, the apparel products are packed in a single package. In this case, a single order ID is assigned, but the apparel products, which are products to be produced, are assigned respective job IDs.

The job ID is identification information of a print job. A number of print jobs equal to the number of times printing is to be performed to produce one apparel product are assigned. In a case where an apparel product, which is a product to be produced, is completed through a single printing operation, one job ID is assigned to the apparel product (e.g., a T-shirt). The order acceptance unit 11 assigns a job ID.

The order date and time is the date and time at which the order acceptance unit 11 accepted the order information.

The purchaser ID is identification information of a purchaser who has purchased the apparel product, which is a product to be produced. Past purchasers are recorded, and the same purchaser is assigned the same purchaser ID. The order acceptance unit 11 assigns a purchaser ID to a purchaser who has placed an order for the first time.

The shipment destination is a delivery destination of the apparel product.

The SKU is an identification number of a fabric (an identification number that identifies one kind of fabric from various series, colors, sizes, and the like of fabrics). That is, the SKU is identification information of a fabric on which the print image is to be printed. The SKU can differently handle fabrics of different colors, sizes, packages, and the like even when the fabrics are of the same product.

The print image is an image to be printed on the fabric.

The print position indicates a portion of the fabric in which the print image is to be printed (e.g., front, back, chest, or arm).

The final rendering is an image obtained by superimposing the print image on the material image.

### Production Management System

The production management system 20 includes a second communication unit 21, an order sorting unit 22, a third communication unit 23, and a production site management unit 25. These functions of the production management system 20 are functions or means implemented by any one of the hardware components illustrated in FIG. 2 operating in accordance with instructions from the CPU 501 according to a program loaded onto the RAM 503 from the HD 504. The production management system 20 further includes a storage unit 29 implemented by the RAM 503 or the HD 504 illustrated in FIG. 2. The storage unit 29 includes a production site information DB 26, a device information DB 27, and an order transaction information DB 28.

The second communication unit 21 receives order information from the external server 70. The order sorting unit 22 selects, for each piece of order information or for each plurality of pieces of order information, a supplier receiving the order request from among the multiple production sites.

Further, the second communication unit 21 transmits and receives information to and from the terminal device 60.

The second communication unit 21 further transmits and receives information to and from an administrator terminal 73 used by an administrator who manages the production management system 20.

When selecting a production site according to an apparel product, which is a product to be produced, for example, the order sorting unit 22 displays profile information of manufacturers at the production sites such that the profile information is viewable to the purchaser (order requester), and selects a production site of a desired manufacturer. The order sorting unit 22 transmits order information to the production site selected by the order sorting unit 22 to request the manufacturer at the production site to produce the apparel product, which is a product to be produced.

The order sorting unit 22 provides a supplier selection site and receives supplier selection information of an apparel product that is a product to be produced selected by an order requester on the web browser operating on the terminal device 60 operated by the order requester.

The supplier selection site accepts a supplier of the apparel product via the web application implemented through the cooperation of programs executed on the web server and the web browser. The order sorting unit 22 creates screen information of a screen to be displayed by the web browser. The screen information is a program described in HTML, XML, a script language, CSS, and the like. The structure of a web page is mainly specified by HTML, the operation of the web page is defined by a script language, and the style of the web page is specified by CSS.

Instead of the web application, a native application for selecting a supplier may operate on the terminal device 60. In this case, the configuration of the screen is included in the native application, and the content to be displayed is transmitted from the production management system 20 to the terminal device 60 in XML or the like.

An example functional configuration of the order sorting unit 22 for implementing a process for selecting a manufacturer (production site) will be described. As illustrated in FIG. 4, the order sorting unit 22 includes a first relevance calculation unit 22a, a first manufacturer information display unit 22b, a first additional information input unit 22c, a second relevance calculation unit 22d, a second manufacturer information display unit 22e, a second additional information input unit 22f, a third relevance calculation unit 22g, a third manufacturer information display unit 22h, a fourth manufacturer information display unit 22i, a manufacturer selection unit 22j, a contact unit 22k, a request input reception unit 22l, and a search termination input acceptance unit 22m.

The request input reception unit 22l functions as an example of an input reception unit that receives the order information accepted by the order acceptance unit 11. The order information is an example of input data including a request from the purchaser, such as a job requested by the purchaser and requirements for a manufacturer involved in the requested job. In a case where the product production and sales system 100 according to the present embodiment functions as a customer selection system, a request input reception unit 221 functions as an example of a received order content input reception unit that receives input data including a request from a contractor, such as requirements for the order received by the contractor. Examples of the requirements include requirements for the content of a product or service of the contractor such as a manufacturer of the product or a provider of the service. The service may be provided in response to receipt of, for example, an order for a service such as a network system service or a home tutoring service.

The first relevance calculation unit 22a is an example of a first relevance calculation unit that extracts manufacturer candidates satisfying a search condition for searching a manufacturer database (e.g., the production site information DB 26) in the production management system 20, by using the order information received by the request input reception unit 22l as the search condition. In a case where the product production and sales system 100 according to the present embodiment functions as a customer selection system, the first relevance calculation unit 22a functions as an example of a first relevance calculation unit that extracts a customer candidate satisfying a search condition for searching a customer database in the customer selection system, by using input data received by the request input reception unit 221 (received order content input reception unit) as the search condition.

The first manufacturer information display unit 22b is an example of a first search target information display unit that displays, as manufacturer information (an example of search target information), manufacturer candidates satisfying a search condition, which are obtained by searching a customer database in the customer selection system by using input data received by the request input reception unit 221 as the search condition. In the present embodiment, the first manufacturer information display unit 22b may display all of the manufacturer candidates as the manufacturer information. In the present embodiment, alternatively, when the number of manufacturer candidates is greater than a predetermined number, the first manufacturer information display unit 22b displays, as the manufacturer information, fewer manufacturer candidates (e.g., relevant manufacturer candidates) than the number of manufacturer candidates. In the present embodiment, when the number of manufacturer candidates is less than the predetermined number, the first manufacturer information display unit 22b displays all of the manufacturer candidates as the manufacturer information. In the present embodiment, the first manufacturer information display unit 22b extracts, from among the manufacturer candidates extracted by the first relevance calculation unit 22a, several manufacturer candidates fewer than the number of manufacturer candidates, and displays the extracted manufacturer candidates as the manufacturer information on the terminal device 60 (e.g., on a screen displayed by the web browser of the terminal device 60). Specifically, the first manufacturer information display unit 22b displays, as the manufacturer information, manufacturer candidates that differ in at least some of the conditions that the manufacturer candidates have among the manufacturer candidates. The first manufacturer information display unit 22b may display a plurality of less relevant manufacturer candidates among the manufacturer candidates extracted by the first relevance calculation unit 22a. Accordingly, candidates satisfying the condition desired by the user are easily obtained with a few trials. In a case where the product production and sales system 100 according to the present embodiment functions as a customer selection system, the first manufacturer information display unit 22b functions as an example of a first customer information display unit that displays, among candidate customers satisfying a search condition for searching a customer database in the customer selection system, fewer customer candidates than the number of candidate customers as customer information, by using input data received by the request input reception unit 221 as the search condition.

The first additional information input unit 22c is an example of a first additional information input unit that can receive, as an input, based on first input information for the one or more manufacturer candidates displayed by the first manufacturer information display unit 22b, first additional information including an additional search condition different according to a manufacturer candidate selected from among the one or more manufacturer candidates. For example, the first additional information input unit 22c may automatically receive, as an input, the first additional information based on the first input information, or may receive, as an input, the first additional information in accordance with an instruction from the purchaser.

The first input information may include the result of selecting a manufacturer candidate from among the manufacturer candidates extracted by the first relevance calculation unit 22a and a ranking of the manufacturer candidates extracted by the first relevance calculation unit 22a. The result included in the first input information may be one manufacturer candidate selected from among the manufacturer candidates extracted by the first relevance calculation unit 22a.

Techniques for matching a creator (purchaser) and a client (manufacturer) have been developed. Further, matching (e.g., artificial intelligence (AI) based matching) is performed between a business entity and a printing service provider. Existing matching is a technique used to, when receiving an order for a certain amount of lot size (e.g., 100 prints per lot) at a time, mechanically sort printing service providers that can handle the lot size with print production capacity on a short delivery schedule at low cost, based on business entity profiles registered in advance.

Despite the recent increase in the demand for small-lot, multi-product-type printing, there is no system that uses a matching algorithm for security, reliability, and matching with an emphasis on the quality expected by business entities that use outsourcing. Thus, the dissatisfaction of the business entities that use outsourcing remains unaddressed. That is, it is difficult for a requester (for example, order requester) themselves to match printing service providers. **In** other words, matching between a printing service provider and a creator remains unrealized.

To address this inconvenience, in the present embodiment, order information received by the request input reception unit 22l is used as a search condition for searching a manufacturer database in the production management system 20, manufacturer candidates satisfying the search condition are displayed as manufacturer information on the terminal device 60, a manufacturer candidate is selected from the displayed manufacturer information, and first additional information including an additional search condition based on the selection result is input. This configuration narrows down the manufacturer candidates in accordance with the request from a purchaser. Thus, security, reliability, and matching with a manufacturer with an emphasis on the quality expected by the purchaser that uses outsourcing can be achieved.

In a case where the product production and sales system 100 functions as a customer selection system, the first additional information input unit 22c functions as an example of a first additional information input unit that can receive, as an input, based on first input information for one or more customer candidates displayed by the first manufacturer information display unit 22b (first customer information display unit), first additional information including an additional search condition different according to a customer candidate selected among the one or more customer candidates. For example, a user (customer) registers a product and a job that the user desires, and the desired product and job are stored as data. As a result, a distributor (contractor) can implement a job matching flow for selling products that can be produced by the distributor or services that can be provided by the distributor to the customer. In addition, the distributor performs a search based on the specifications and information of the services that can be provided or the products that can be produced, and obtains matching customer information. The distributor can also contact and consult with a customer that is likely to match the conditions.

The second relevance calculation unit 22d is an example of a second relevance calculation unit that extracts manufacturer candidates satisfying the first additional information received by the first additional information input unit 22c.

The second manufacturer information display unit 22e is an example of a second search target information display unit that displays relevant manufacturer candidates among the manufacturer candidates extracted by the second relevance calculation unit 22d on the terminal device 60 (e.g., on a screen displayed by the web browser of the terminal device 60). For example, the second manufacturer information display unit 22e may display all of the relevant manufacturer candidates among the manufacturer candidates extracted by the second relevance calculation unit 22d.

The second additional information input unit 22f is an example of a second additional information input unit that receives, as an input, based on second input information for the manufacturer candidates displayed by the second manufacturer information display unit 22e, second additional information including an additional search condition. For example, the second additional information input unit 22f may automatically receive, as an input, the second additional information based on the second input information, or may receive, as an input, the second additional information in accordance with an instruction from the purchaser. The second input information may include the result of selecting a manufacturer candidate from among the manufacturer candidates extracted by the second relevance calculation unit 22d and a ranking of the manufacturer candidates extracted by the second relevance calculation unit 22d.

The third relevance calculation unit 22g is an example of a third relevance calculation unit that extracts manufacturer candidates satisfying the second additional information received through the second additional information input unit 22f.

The third manufacturer information display unit 22h is an example of a third search target information display unit that displays relevant manufacturer candidates among the manufacturer candidates extracted by the third relevance calculation unit 22g on the terminal device 60 (e.g., on a screen displayed by the web browser of the terminal device 60). For example, the third manufacturer information display unit 22h may display all of the relevant manufacturer candidates among the manufacturer candidates extracted by the third relevance calculation unit 22g.

The fourth manufacturer information display unit 22i is an example of a fourth search target information display unit that displays, for relevant manufacturer candidates among the manufacturer candidates extracted by the third relevance calculation unit 22g, registered additional information (e.g., past records of products or the like, and video messages) of the respective manufacturers on the terminal device 60 (e.g., on a screen displayed by the web browser of the terminal device 60). The additional information displayed by the fourth manufacturer information display unit 22i may include content related to the order information received by the request input reception unit 22l.

The manufacturer selection unit 22j is an example of a search target selection unit that selects a manufacturer from among the manufacturer candidates displayed by the third manufacturer information display unit 22h. The contact unit 22k is an example of a contact unit that allows the requester to directly contact the manufacturer selected by the manufacturer selection unit 22j. The contact unit 22k notifies the manufacturer selected by the manufacturer selection unit 22j that the requester has determined to make the request. The manufacturer can notify the requester (order placer) that the request is acceptable, and the manufacturer and the requester may communicate with each other to conduct a transaction for production. The search termination input acceptance unit 22m is an example of a search termination input acceptance unit that accepts a selection of termination of a manufacturer search. For example, the search termination input acceptance unit 22m may accept a selection of termination of the manufacturer search in response to pressing of a matching end button on a screen displayed by the web browser of the terminal device 60.

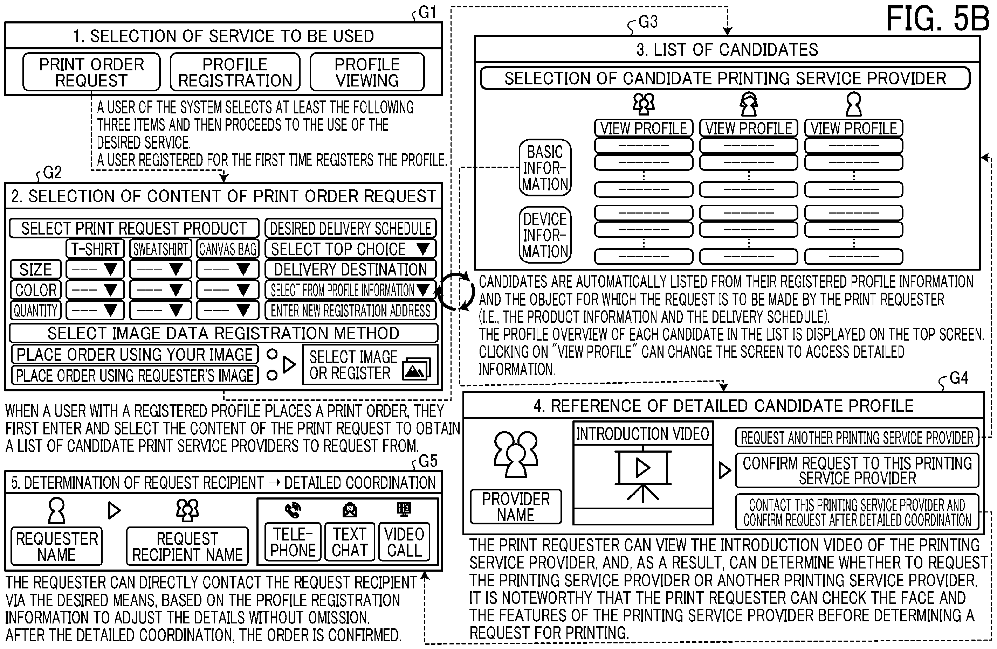

FIG. 5B is a diagram illustrating an example of a manufacturer selection process performed by the production management system 20 according to the present embodiment. First, an example of a first-stage matching flow will be described. In the first-stage matching flow, first, a first search process is executed. In the first search process, when an order request for a job such as printing is selected and input data (order information) such as a request for the job such as printing and the requirements for a desired manufacturer is received on screens G1 and G2 by the request input reception unit 22l, the first relevance calculation unit 22a searches for (extracts) manufacturer candidates based on the input information (order information). For example, in the first search process, the first relevance calculation unit 22a performs a concept search based on keyword input or text input or a search based on a photograph of an output image (e.g., a product) to find manufacturer candidates. For example, in the first search process, the first manufacturer information display unit 22b may search for and display three manufacturer candidates among the found manufacturer candidates on a screen G3. This enables the production management system 20 to automatically search the manufacturer candidates and select a manufacturer candidate closest to the expectation of the purchaser. The purpose of the first search process may be to search legends with broad criteria for rough filtering of manufacturers.

In the first-stage matching flow, then, a second search process is executed. In the second search process, at least one manufacturer candidate is selected from among the manufacturer candidates found in the first search process using the screens G2 and G3, and the first additional information is input to the first additional information input unit 22c based on the selection result. In the second search process, furthermore, the second relevance calculation unit 22d searches for (extracts) manufacturer candidates based on the selected manufacturer candidate or candidates and the first additional information. The first additional information may include, in addition to the order information input by a method similar to that in the first search process, more detailed request content such as the deadline and the total budget of the job. In the second search process, furthermore, the second manufacturer information display unit 22e displays all of the manufacturer candidates found as search results. The purpose of the second search process may be fine narrowing down for the convergence of the results of the manufacturer search.

In the first-stage matching flow, then, a third search process is executed. In the third search process, three manufacturer candidates are selected from among the manufacturer candidates found in the second search process using the screens G2 and G3, and the second additional information is input to the second additional information input unit 22f. That is, the selection of manufacturers and the input of additional information on the screens G2 and G3 are repeated to improve the accuracy of selection of manufacturer candidates closer to the expectation of the purchaser and narrow down the manufacturer candidates that the purchaser matches. In the third search process, furthermore, the third relevance calculation unit 22g searches for (extracts) manufacturers based on the selected manufacturer candidates and the second additional information. The second additional information may be information to be input using a method similar to that in the first search process and the second search process. In the third search process, furthermore, the third manufacturer information display unit 22h displays ten manufacturer candidates among the found manufacturer candidates. The purpose of the third search process may be automatic narrowing down of manufacturer candidates for the determination of a final manufacturer. As a result, the operation of searching for and narrowing down manufacturer candidates in the first-stage matching flow ends.

The request for which the input is received in the first search process may include, for example, a desired medium on which printing (an example of a job) is to be performed, a desired production site at which printing is to be performed, a final product, an image file, and a sample image, as indicated in Table 1 below. As indicated in Table 1 below, the first additional information and the second additional information for which the input is received in the second search and the third search process, respectively, may include, for example, more detailed request content than that of the order information. Examples of such more detailed request content include a desired delivery date, a requested price for printing, requested unit and total prices, and whether to provide a medium to be printed.

**Table 1**

| Item | Content |
|---|---|
| First search process: | 1. Desired medium (T-shirt, mug, poster, etc.) on which printing is to be performed |
| Request content 1 (Content of requested job) | |
| | 2. Desired production site (prefecture) at which printing is to be performed, and delivery destination |
| | 3. Photograph of final product (after production by printing) |
| | 4. Sending of image file of print image to be requested, if any |
| | 5. Sending of sample image as image of final product if no print image to be requested is available |
| | The purpose is to give an image of what is requested, such as graphic design, illustration, font design, or logo design. |
| | It is expected to match printing service providers with designing ability. |
| Second and third search | 1. Desired delivery date |
| processes: | 2. Input of estimated requested price for printing (including unit price of medium to be printed), requested unit and total prices, and desired price |
| Request content 2 (Detailed coordination for delivery schedule, desired price, etc.) | |
| | 3. Whether to provide medium to be printed |

Next, an example of a second-stage matching flow will be described. The second-stage matching flow may be a phase for carrying out matching with a final request recipient. In the second-stage matching flow, the order requester carries out matching through communication including, for example, online meeting and responding to a direct message (DM) to narrow down the final request recipient (manufacturer), and determines the request recipient. In the second-stage matching flow, furthermore, the order requester and the request recipient can transmit DM responses and video messages in their spare time. Thus, the second-stage matching flow can realize efficient matching since no extra time is incurred for matching due to, for example, schedule adjustments for communication between the order requester and the request recipient or inability to contact each entity in their absence.

In the second-stage matching flow, first, a first operation is executed. In the first operation, the fourth manufacturer information display unit 22i displays past records (e.g., products) and video messages of manufacturer candidates (e.g., ten manufacturers) found in the third search process such that the past records and video messages are viewable, and manufacturer candidates (e.g., three manufacturers) serving as DM recipients are selected. The product, which is an example of a past record displayed in the first operation, may be related to an output image (e.g., a product) expected by the order placer (requester), which is input in the first search process, or the content of the request. The video messages displayed in the first operation may be registered in the platform in advance.

In the first operation, furthermore, the contact unit 22k transmits a DM to the selected manufacturer candidates (e.g., three manufacturers) using a screen G4, and receives responses from the manufacturer candidates. The manufacturer candidates to which the DM is transmitted are allowed to view all of the various types of information input in the first to third search processes (e.g., the order information, the first additional information, and the second additional information) and provide a response indicating whether the job is acceptable. At this time, the manufacturer candidates can additionally respond with video messages.

In the second-stage matching flow, then, a second operation is executed. In the second operation, the order placer (requester) transmits, based on the operation result of the first operation, a video message for coordination of details and narrowing down the final manufacturer. The video message may be a response to the manufacturer candidates obtained as a result of the first operation. At this time, the order placer (requester) may directly contact the manufacturer candidates via telephone or any other communication means.

In the second operation, furthermore, in response to the response or direct contact from the order placer (requester), the manufacturer candidates return responses indicating acknowledgement to the client when the job is acceptable. The order placer (requester) is notified of the results (responses from the manufacturer candidates) from the platform, and determines a final matching partner (manufacturer).

In the second-stage matching flow, then, a third operation is executed. In the third operation, the manufacturer selection unit 22j determines (selects) a request recipient (manufacturer) as a final matching result using a screen G5. In the third operation, then, the contact unit 22k notifies the request recipient of the determination to request the job. The manufacturer as the request recipient is notified of and receives the determination to request the job. That is, the second-stage matching flow is a phase for providing communication between the purchaser and the request recipient (the manufacturer candidate) through mechanical narrowing down of the manufacturer candidates. Thus, the communication between the purchaser and the request recipient and the matching of the requirements are completed on the production management system 20.

As a result, the matching operation between the order placer (requester) and the manufacturer ends.

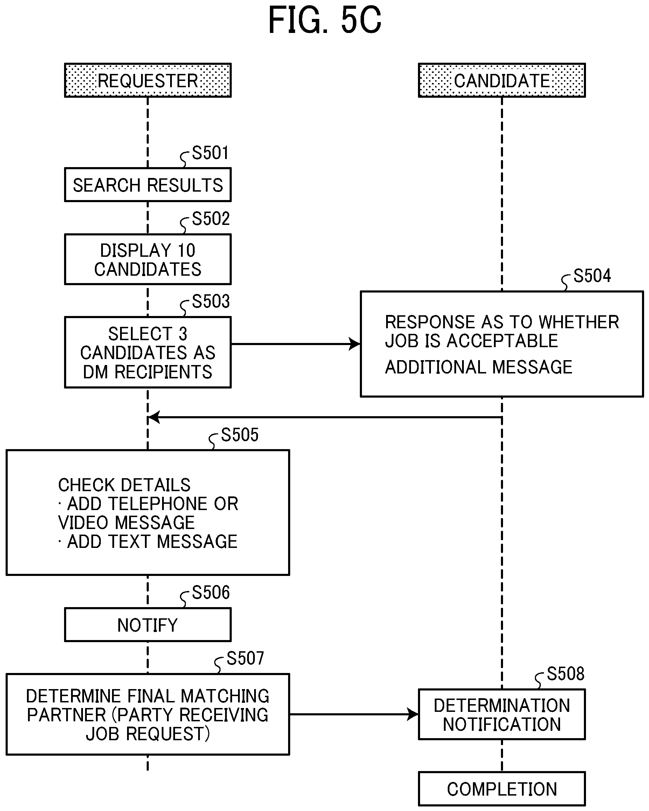

FIG. 5C is a sequence diagram illustrating an example of the second-stage matching flow, which is performed by the production management system 20 according to the present embodiment. The process up to the end of the matching operation between the requester and a manufacturer candidate (in FIG. 5C, "candidate" for short) in the second-stage matching flow may be performed in accordance with a flowchart illustrated in FIG. 5C. When manufacturer candidates are found in the third search process (step S501), the third manufacturer information display unit 22h displays ten manufacturer candidates among the found manufacturer candidates (step S502). Then, the requester selects, as a DM recipient, a candidate (manufacturer candidate) for a party receiving the job request in the production management system 20 from among the displayed manufacturer candidates (step S503).

Then, when the candidate transmits, for example, information indicating whether the job is acceptable and an additional message to the requester (step S504), the contact unit 22k checks details such as the additional message received from the candidate, adds a video message, a text message, and the like to the additional message or the like (step S505), and notifies (contacts) the requester (step S506). Then, the manufacturer selection unit 22j determines, as a final matching result, a manufacturer that is the party receiving the job request (step S507). Then, the contact unit 22k notifies the determined manufacturer of the determination to request the job (step S508).

That is, the first-stage matching flow involves automatic narrowing down to determine the final candidate. In contrast, the purpose of the second-stage matching flow is to perform detailed matching on the candidates to be automatically narrowed down in the first-stage matching flow. The feature of the second-stage matching flow is intended to remove mismatches between the requester and manufacturers through communication via direct messages in addition to automatic narrowing down on the system side.

Referring back to FIG. 4, the third communication unit 23 transmits the order information to the information processing system 40 of any one production site system 30 selected by the order sorting unit 22.

The production site management unit 25 manages various types of information managed in the production site information DB 26. The production site management unit 25 allows a manufacturer serving as the order requester to view the profile information of the manufacturers registered in the production site information DB 26. The manufacturer serving as the order requester can make a production request (order) to a desired manufacturer from the viewed information. The profile information registered in the production site information DB 26 is viewable to all of the registered manufacturers.

The production site information DB 26 manages profile information of each manufacturer registered from the information processing system 40 of the production site system 30.

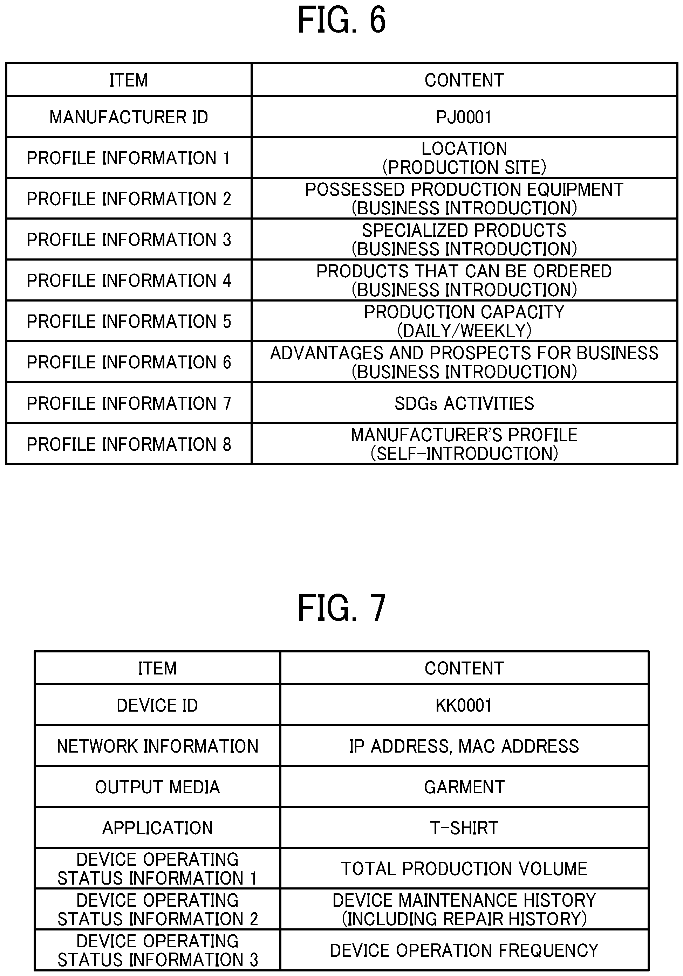

FIG. 6 is a diagram illustrating an example of a table of profile information of a manufacturer. As illustrated in FIG. 6, the production site information DB 26 manages a manufacturer ID for identifying the manufacturer, and various types of profile information. The profile information of the manufacturer illustrated in FIG. 6 includes, for example, the following items:
Location (production site)
Possessed production equipment (business introduction)
Specialized products (business introduction)
Products that can be ordered (business introduction)
Production capacity (daily/weekly)
Advantages and prospects for business (business introduction)
SDGs activities
Manufacturer's profile (self-introduction)

The management of the profile information of the manufacturer in the manner described above makes the information on the manufacturer accessible to other manufacturers, and a manufacturer serving as the order requester can check the identity of the manufacturer and safely place an order before outsourcing. In particular, the previous production history and production performance information are useful for determining the supplier receiving the order request, and the manufacturer updates the production performance information to appeal to new business opportunities.

In particular, the production site information DB 26 includes, as the profile information of the manufacturer, product information indicating products that can be produced by the production equipment. One advantage to a manufacturer receiving orders is that the orders to be received by the manufacturer are mainly for media that the manufacturer is accustomed to handling for production in normal business. In contrast, one advantage to a manufacturer serving as an order requester is that the manufacturer can make orders for products to which each manufacturer is accustomed and feel secure about the quality of the products. Furthermore, products that can be produced by each manufacturer can be referred to on the production management system 20, and an appropriate selection can be achieved.

The device information DB 27 manages, as device information, the operating statuses of the DTG printers 72 used by the manufacturers registered in the information processing system 40.

FIG. 7 is a diagram illustrating an example of a table of the device information. As illustrated in FIG. 7, the device information DB 27 manages a device ID for identifying each of the DTG printers 72 used by the manufacturers, and various types of device information. The device information illustrated in FIG. 7 includes, for example, the following items:
Network information
Output media
Application
Device operating status information

The network information specifies, for example, an Internet protocol (IP) address and a media access control (MAC) address. The output media specify, for example, a garment. The application specifies, for example, a T-shirt.

The device operating status information includes, for example, the following items:
Total production volume
Device maintenance history (including repair history)
Device operation frequency

As described above, the operating statuses of the DTG printers 72 used by the manufacturers are acquired by the device monitoring system 32 (see FIG. 4) of the information processing system 40, and are reflected in the device operating status information.

In particular, the device information DB 27 includes operating status information of the production equipment as the device information. This allows a manufacturer to refer to, based on the operating status of the production equipment, the available delivery schedule for an order and the frequency of use of the production equipment alone and refer to the state of the production equipment based on the error history. Thus, the manufacturer can make a request to another manufacturer at an appropriate time.

By using the device information managed in the device information DB 27, a manufacturer serving as an order requester can check the operation history and the use state of another manufacturer and use the device information to determine a manufacturer to which the request is assigned.

Then, by using the profile information of the manufacturers managed in the production site information DB 26 and the device information managed in the device information DB 27, a manufacturer serving as the order requester themselves can select a manufacturer (match manufacturers) in accordance with the content of the request made by the order requester, without using mechanical matching.

The order transaction information DB 28 manages information on orders placed to and received from other manufacturers.

The various items of the profile information and the device information illustrated in FIGs. 6 and 7 are an example, and a manufacturer that uses the production management system 20 may determine items of the profile information and the device information as appropriate.

### Information Processing System

The information processing system 40 includes a fourth communication unit 31, the device monitoring system 32, and a printing execution unit 33. These functions of the information processing system 40 are functions or means implemented by any one of the hardware components illustrated in FIG. 2 operating in accordance with instructions from the CPU 501 according to a program loaded onto the RAM 503 from the HD 504.

The fourth communication unit 31 receives order information from the production management system 20, generates a print job, and transmits the print job to a corresponding one of the DTG printers 72. That is, the manufacturer obtains a production request notification from the production management system 20 as a result of the order requester themselves viewing the profile information of the manufacturer, and can receive the order from the order requester.

When the order information is received, the printing execution unit 33 creates RIP data corresponding to the DTG printer 72 based on the order information. RIP stands for raster image processor. The RIP converts print images, which are digital data created by various applications, into a format suitable for printing, such as a bitmap format.

Depending on the DTG printers 72, for example, inks (e.g., yellow, magenta, cyan, and black (YMCK) inks or YMCK + white (W) inks) different for the respective models may be used, the amount of each color ink to be applied may vary according to the difference in color to be reproduced, or the data formats or the like that can be identified by the DTG printers 72 may differ. Thus, the printing execution unit 33 creates RIP data appropriate for the DTG printer 72.

The printing execution unit 33 causes the DTG printer 72 to print a print image subjected to RIP processing.

The device monitoring system 32 monitors the device operating statuses of the DTG printers 72 by using a communication protocol such as Simple Network Management Protocol (SNMP). More specifically, the device monitoring system 32 acquires the statuses of the DTG printers 72 and can remotely monitor the statuses of the DTG printers 72. The device monitoring system 32 acquires, for example, the following device operating statuses of the DTG printers 72:
Total production volume
Device maintenance history (including repair history)
Device operation frequency

The device monitoring system 32 may cooperate with dedicated software bundled with each of the DTG printers 72 or may directly associate a workflow system (WFS) included in the production management system 20 with each of the DTG printers 72. The device monitoring system 32 may be integrated on the production management system 20 side based on API coordination and a software development kit (SDK) published on the DTG printer 72 side.

The fourth communication unit 31 transmits the device operating statuses of the DTG printers 72, which are acquired by the device monitoring system 32, to the production management system 20, and reflects the device operating statuses of the DTG printers 72 in the device information managed in the device information DB 27. Preferably, the device operating statuses of the DTG printers 72 are automatically updated in response to the production management system 20 periodically receiving information from the cloud.

### Example Screen Operation

Next, a description will be given of an example screen transition performed by the order sorting unit 22 in a case where a manufacturer serving as an order requester places an order in the production management system 20 to request another manufacturer to perform printing.

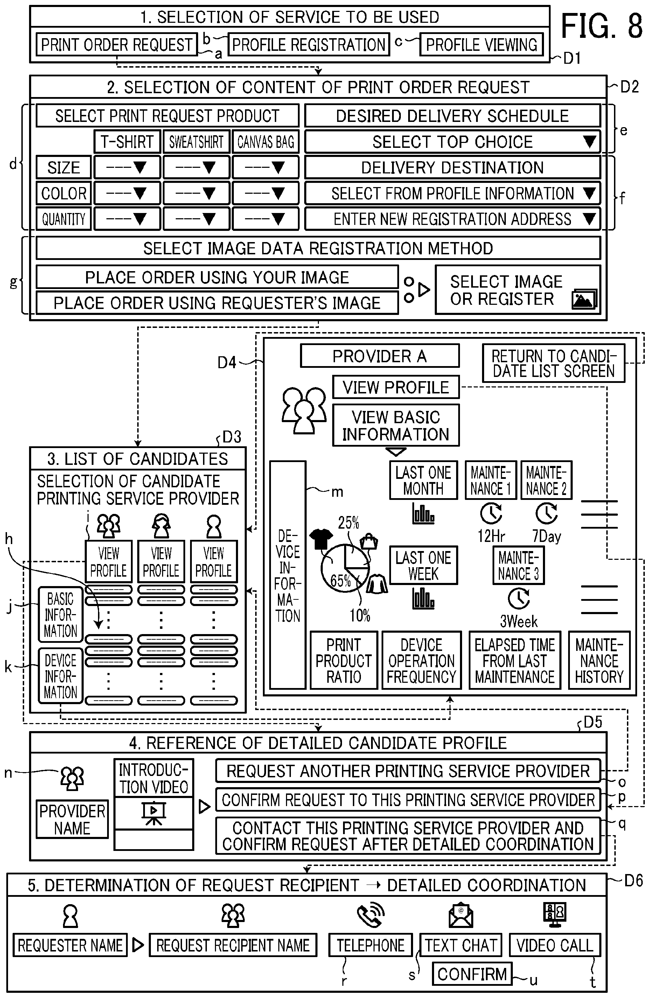

FIG. 8 is a diagram illustrating an example of a transition of a production management screen viewable to the order requester. In the illustrated example, a product to be produced is an apparel product on which a desired image is printed.

As illustrated in FIG. 8, first, the order sorting unit 22 displays a screen D1 for selection of a service to be used. The screen D1 is a production management screen. The screen D1 enables selection of three services: requesting a print order, registering a profile, and viewing the profile. A manufacturer serving as the order requester selects any one of three items, namely, print order request a, profile registration b, and profile viewing c, on the screen D1, and proceeds to the use of the desired service. If the manufacturer is an order requester registered for the first time, the manufacturer registers the profile on the screen D1.

In the following description, the print order request a is selected on the screen D1. When the print order request a is selected on the screen D1, the order sorting unit 22 transitions the display screen to a screen D2 for selection of the content of the print order request.

In a case where an order requester that is a manufacturer whose profile has already been registered places a print order, the manufacturer serving as the order requester first inputs the content of the print order, such as a "Select print request product" item d and basic ordering information (a desired delivery schedule e and a delivery destination f), on the screen D2. After that, the manufacturer selects an image data registration method g on the screen D2. The "Select print request product" item d is used to select product information such as the type, size, color, and quantity of the apparel product. The selection of the image data registration method g involves selecting any one of a radio button indicating "Place order using your image" and a radio button indicating "Place order using requester's image", and thereafter selecting or registering image data.

When the manufacturer serving as the order requester inputs the content of the print request in the "Select print request product" item d and selects the image data registration method g, the order sorting unit 22 transitions the display screen to a manufacturer candidate list screen D3.

The manufacturer serving as the order requester can obtain a candidate list to determine which manufacturer candidate to request on the manufacturer candidate list screen D3. The manufacturer candidates are automatically listed from the registered profile information of the manufacturer candidates and the object for which the request is to be made by the order requester (i.e., the product information and the basic ordering information). The manufacturer candidate list screen D3 displays, on a top screen, a profile overview h of each of the manufacturer candidates in the candidate list. The manufacturer serving as the order requester can view in detail the profile information and the device information of any manufacturer candidate (i.e., printing service provider) in the candidate list. The details of the profile of a certain manufacturer candidate are viewed by operating a "View profile" button i for a corresponding one of the manufacturer candidates and then operating a "Basic information" button j or a "Device information" button k. As a result, a screen transition can be made.

For example, when the manufacturer serving as the order requester selects the "Device information" button k on the manufacturer candidate list screen D3, the order sorting unit 22 transitions the display screen to a device information viewing screen D4 for viewing detailed information of the device information.

The device information viewing screen D4 displays device information m in which information in the form of a graph and text information in the form of a list are both visualized in accordance with viewing item. The device information m includes, for example, the print product ratio, the device operation frequency of the DTG printer 72, the elapsed time from the last maintenance of the DTG printer 72, and the maintenance history of the DTG printer 72. After viewing the device information m, the manufacturer serving as the order requester can select the supplier receiving the order request. The visualization of the device information m (in the form of a graph and the like) may be performed by an incorporated general-purpose business intelligence (BI) tool.

For example, when the manufacturer serving as the order requester selects and operates any of the "View profile" buttons i on the manufacturer candidate list screen D3, the order sorting unit 22 transitions the display screen to a profile screen D5. On the profile screen D5, detailed information n of the profile information, such as the name of the manufacturer and introduction video of the manufacturer, are viewable.

Thus, the manufacturer serving as the order requester can view the introduction video of the corresponding printing service provider on the profile screen D5, and, as a result, can determine whether to request this printing service provider (i.e., manufacturer) or another manufacturer. It is noteworthy that the order requester can check the face and the features of the printing service provider on the production management system 20 before determining a request for printing.

The manufacturer registered in the production management system 20 registers, in the production site information DB 26, information indicating the profile (self-introduction) of the manufacturer themselves, namely, the name of the manufacturer and the introduction video of the manufacturer, at the same time as or later than the registration of the profile.

The information indicating the profile (self-introduction) of the manufacturer, namely, the name of the manufacturer and the introduction video of the manufacturer, is not necessarily disclosed, and, in this case, "no information" is displayed on the profile screen D5.

The manufacturer serving as the order requester selects any one of a "Request another printing service provider" item o, a "Confirm request to this printing service provider" item p, and a "Contact this printing service provider and confirm request after detailed coordination" item q on the profile screen D5.

When the manufacturer serving as the order requester selects the "Request another printing service provider" item o, the order sorting unit 22 transitions the display screen to the manufacturer candidate list screen D3.

When the manufacturer serving as the order requester selects the "Confirm request to this printing service provider" item p, the order sorting unit 22 confirms the manufacturer that is the request recipient.

When the manufacturer serving as the order requester selects the "Contact this printing service provider and confirm request after detailed coordination" item q, the order sorting unit 22 transitions the display screen to a detailed coordination screen D6.

The detailed coordination screen D6 displays "telephone" r, "text chat" s, and "video call" t, which are means for contacting a manufacturer that is a possible request recipient, in a selectable manner. The order requester can directly contact a manufacturer that is a possible request recipient, based on profile registration information (i.e., via telephone, text chat, or video call) to adjust the details without omission. The manufacturer serving as the order requester operates a "Confirm" button u after performing the detailed coordination to confirm the order.

Not all of the pieces of order request information can be confirmed online. In particular, in order transactions between businesses called business to business (B to B), detailed coordination items, such as arrangement of image data and delivery by installments, are expected to occur. Even in this case, coordination can be performed through direct negotiation between manufacturers that are users of the production management system 20. The manufacturers can use communication tools such as telephone, online video call, and online chat messaging, as desired, to facilitate smooth communication.

Next, an example will be described in detail in which manufacturer A in the product production and sales system 100 using the production management system 20 is an order requester and issues a production request to manufacturer B via the production management system 20.

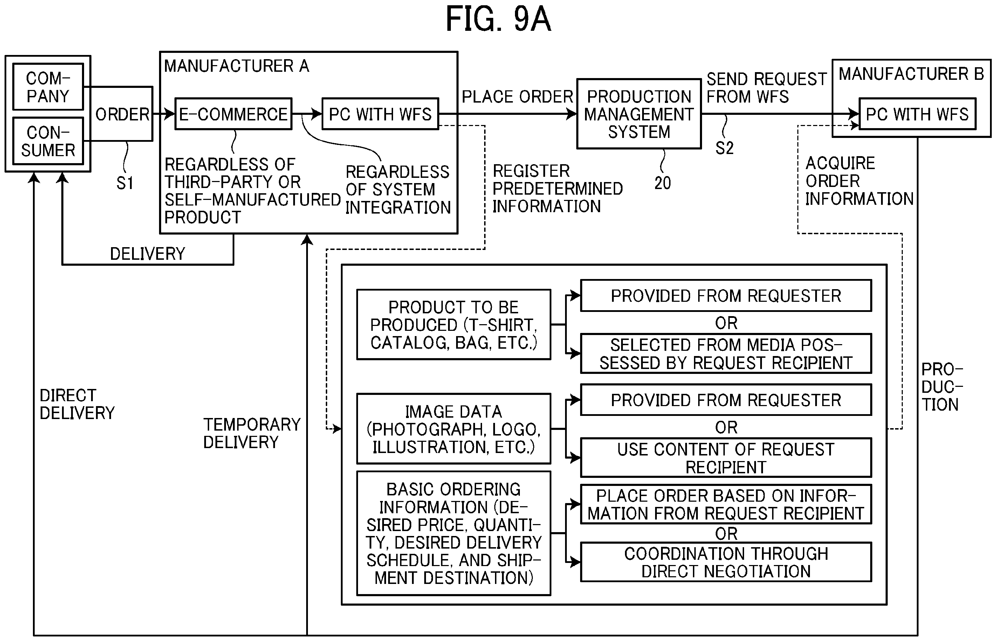

FIG. 9A is a diagram illustrating an example of the production request. As illustrated in FIG. 9A, for example, the manufacturer A receives an order for T-shirts, catalogs, novelties, or the like for selling goods from a company via the order receiving system 10 (step S1).

The manufacturer A makes a request to the manufacturer B via the production management system 20 (step S2). The manufacturer B is selected by the manufacturer A viewing the profile information of the manufacturer B in advance and determining that the manufacturer B is optimal for requesting production. The manufacturer A registers predetermined information in the production management system 20 when making a request. Examples of the predetermined information include the content of the production request, such as selection of a product for which production is to be requested and basic ordering information (such as a desired delivery schedule), and the image data on the screen D2 for selection of the content of the print order request (see FIG. 8).

The predetermined information varies depending on what is provided from the manufacturer A, what uses the resources and content of the manufacturer B, and the content of the request. However, in the production management system 20 according to the present embodiment, the predetermined information is not limited in detail and can be defined as appropriate by the users of the production management system 20.

As described above, the production management system 20 is used for outsourcing by a business entity that produces and sells products such as goods. When outsourcing a product via the production management system 20, a manufacturer serving as an order requester can order the product to a desired entity after checking information (profile information and device information) of a manufacturer responsible for producing the product and information (profile information and device information) of a creator responsible for designing the product from the production management system 20. That is, the manufacturer serving as the order requester can select another manufacturer (including the creator).

For example, the manufacturer is a creator confident in their designing ability and has original content, but has insufficient resources for print production of goods and wishes to obtain a product that is difficult to produce with their possessed production equipment. In this case, the manufacturer can match other manufacturers.

For example, the manufacturer has no original content and has no confidence in their designing ability, but possesses a wide range of devices that can output to various print media (including materials). In this case, the manufacturer can match manufacturers that are creators to expand businesses for new goods and acquire new work (demands).

As described above, in the related art, AI or the like automatically matches manufacturers on the basis of order request information in accordance with determinations that can be made mechanically. In contrast, according to the present embodiment, a user of the system does not perform mechanical matching, but a manufacturer serving as an order requester themselves can select another manufacturer (or match other manufacturers) in accordance with the request made by the order requester. In other words, the present embodiment can provide support for matching between manufacturers in such a way that their respective strengths and weaknesses complement one another.

According to the present embodiment, furthermore, order information received by the request input reception unit 22l is used as a search condition for searching a manufacturer database in the production management system 20, manufacturer candidates satisfying the search condition are extracted, several relevant manufacturer candidates are extracted from among the extracted manufacturer candidates and displayed as manufacturer information on the terminal device 60, a manufacturer candidate is selected from the displayed manufacturer information, and first additional information including an additional search condition based on the selection result is input. This configuration narrows down the manufacturer candidates in accordance with the request from a purchaser. Thus, security, reliability, and matching with a manufacturer with an emphasis on the quality expected by the purchaser that uses outsourcing can be achieved.

While the present disclosure has been described above using an embodiment, the embodiment does not limit the present disclosure in any way. Various modifications and replacements may be made within a scope not departing from the gist of the present disclosure.

The present embodiment describes the production of an apparel product, by way of example but not limitation. In another embodiment, an image may be printed on a material on demand to produce a product.

In the example configurations illustrated in, for example, FIG. 4, the configurations are divided according to main functions to facilitate understanding of processes performed by the order receiving system 10, the production management system 20, and the production site system 30. No limitation on the present disclosure is intended by how the functions are divided by process or by the name of the functions. The processes performed by the order receiving system 10, the production management system 20, and the production site system 30 may be divided into more processing units in accordance with the content of the processes. In addition, the division may be performed so that one processing unit contains more processes.

The illustrated server apparatuses are only illustrative of one of several computing environments for implementing the embodiments disclosed herein. For example, in some embodiments, the production management system 20 includes a plurality of computing devices, e.g., a server cluster, that are configured to communicate with each other over any type of communications link, including a network, a shared memory, etc. to collectively perform the processes disclosed herein.

The functionality of the elements disclosed herein may be implemented using circuitry or processing circuitry which includes general purpose processors, special purpose processors, integrated circuits, application-specific integrated circuits (ASICs), field-programmable gate arrays (FPGAs), and/or combinations thereof which are configured or programmed, using one or more programs stored in one or more memories, to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality.

There is a memory that stores a computer program which includes computer instructions. These computer instructions provide the logic and routines that enable the hardware (e.g., processing circuitry or circuitry) to perform the method disclosed herein. This computer program can be implemented in known formats as a computer-readable storage medium, a computer program product, a memory device, a record medium such as a CD-ROM or DVD, and/or the memory of an FPGA or ASIC.

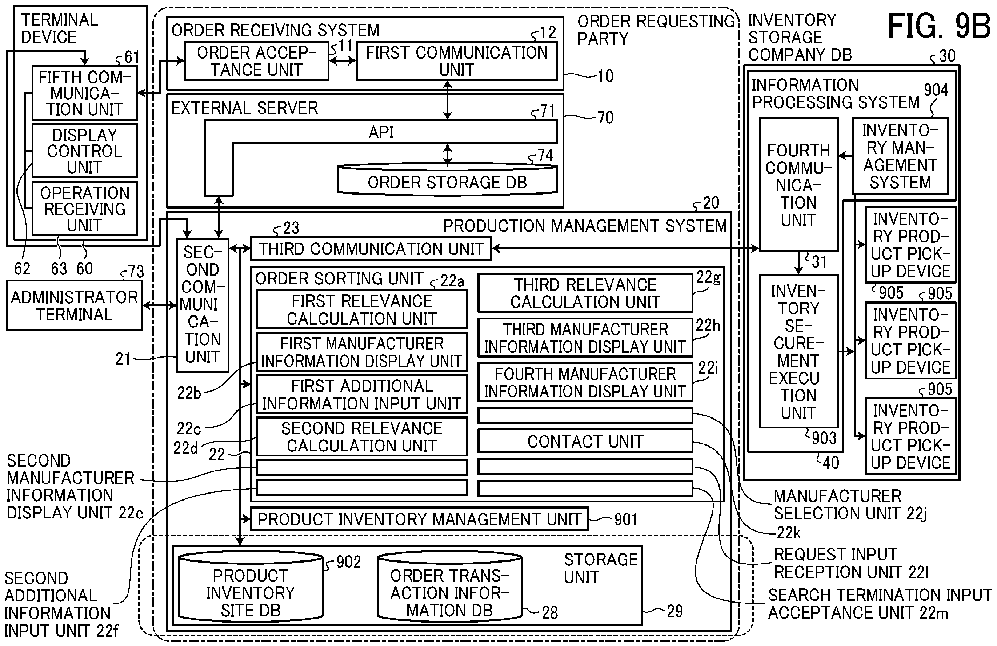

FIG. 9B is a functional block diagram illustrating an example of functions of a search system applied to an EC site. In a case where a search system is applied to an EC site, in the search system, as illustrated in FIG. 9B, the production site management unit 25 may be replaced with a product inventory management unit 901 that manages the inventory of products, the production site information DB 26 may be replaced with a product inventory site DB 902 that is a DB of the inventory of products, the device information DB 27 may be deleted, the order transaction information DB may function as it is, the printing service provider A illustrated in FIG. 4 may be an inventory storage company A, the printing execution unit 33 may be an inventory securement execution unit 903 that secures the inventory of products, the device monitoring system 32 may be replaced with an inventory management system 904, and the DTG printers 72 may be replaced with inventory product pickup devices 905.

The same products may be stocked by a plurality of companies or a single company. Products may be stocked in a plurality of warehouses or a single warehouse. A warehouse that stocks products may be automated, and a monitoring system may manage the inventory of the products. It is anticipated that the stocked products are automatically picked up by a machine dedicated to product pickup (the inventory product pickup devices 905). However, the inventory may be managed manually based on information acquired from the fourth communication unit 31.

### First Embodiment

The present embodiment is an example in which the search system is applied to an EC site or the like. In the following, descriptions of components similar to those in the embodiment described above will be omitted.

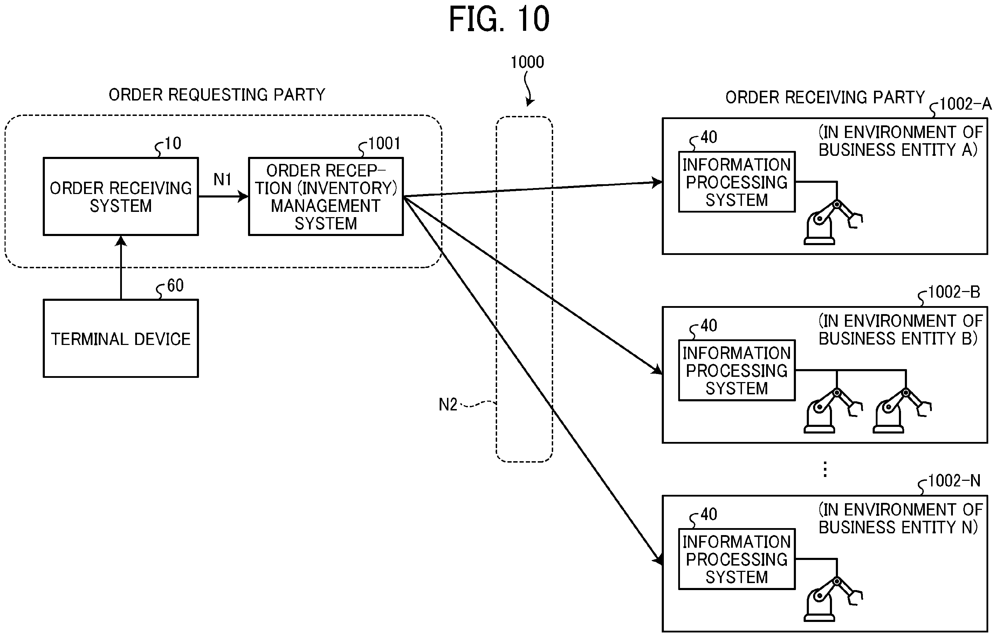

FIG. 10 is a diagram illustrating the general arrangement of a product sales system according to the first embodiment. As illustrated in FIG. 10, a product production and sales system 1000 according to the present embodiment includes an order receiving system 10 that accepts order reception information, an order reception management system 1001 that manages received orders, and information processing systems 40 installed in, for example, a plurality of warehouses 1002. The order receiving system 10 and the order reception management system 1001 can communicate with each other via a network N1, and the order reception management system 1001 can communicate with the information processing systems 40 via a network N2. In general, order reception information from the order receiving system 10 is transmitted to the warehouses 1002 via the order reception management system 1001. For example, in each of the warehouses 1002, an automatic robot or the like searches the inventory for products and dispatches the products to a purchaser. In each of the warehouses 1002, the inventory may be searched manually.

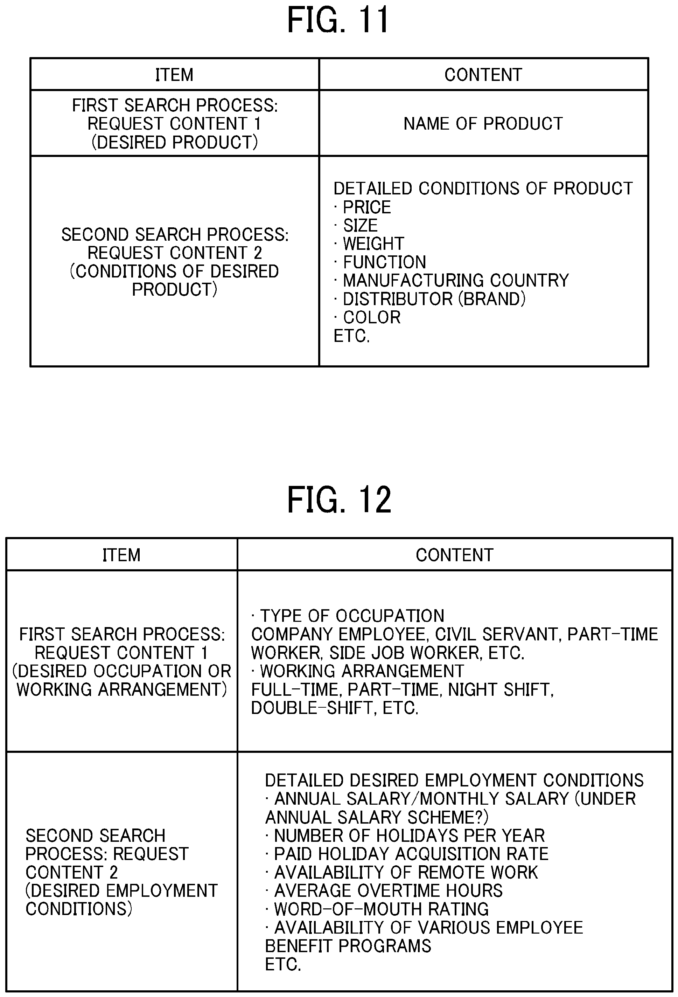

FIG. 11 is a diagram illustrating an example of a product search process performed by the product sales system according to the first embodiment. In the present embodiment, in the first search process, when the request input reception unit 221 receives input data (order reception information) such as the name of a product, the first relevance calculation unit 22a searches for product candidates based on the input order reception information (request content 1). In the present embodiment, the second search process involves searching for product candidates in accordance with detailed product conditions input as the first additional information (request content 2). The detailed product conditions include, for example, the price, the size, the weight, and the function of the product. The first relevance calculation unit 22a may search for product candidates in accordance with the plurality of detailed conditions in the request content 2 in addition to the request content 1.

FIG. 12 is a diagram illustrating an example of a human resources search process performed by a human resources matching system according to the first embodiment. In the present embodiment, in the first search process, when the request input reception unit 221 receives input data such as a type of occupation and a working arrangement, the first relevance calculation unit 22a searches for candidates based on the input data (request content 1). In the present embodiment, the second search process involves searching for candidates in accordance with detailed desired employment conditions input as the first additional information (request content 2). The detailed desired employment conditions include, for example, annual salary, monthly salary, the number of holidays per year, and a paid holiday acquisition rate. The first relevance calculation unit 22a may search for candidates in accordance with the plurality of detailed conditions in the request content 2 in addition to the request content 1.

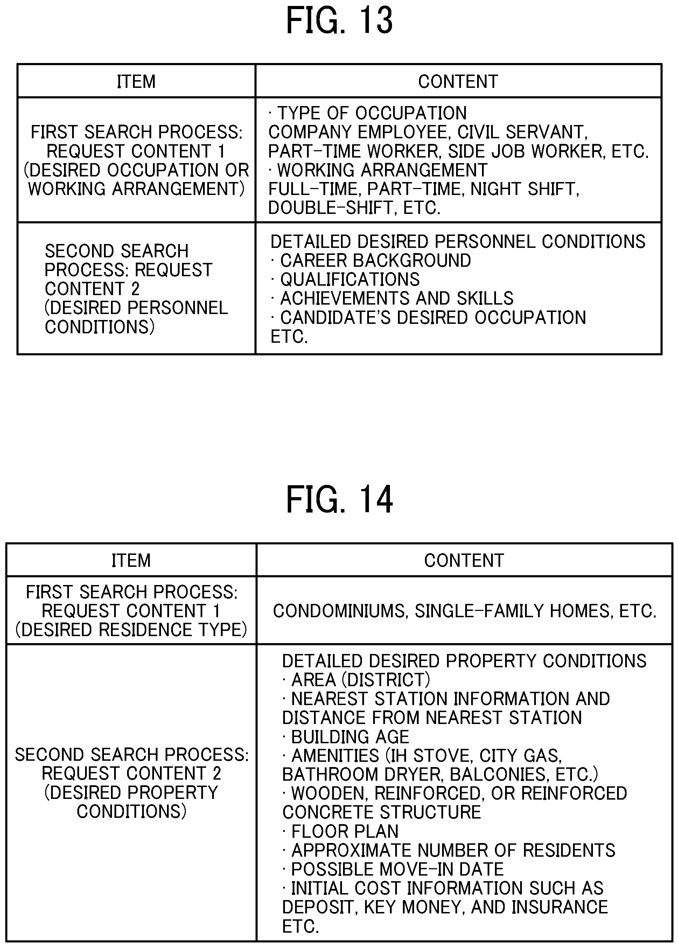

FIG. 13 is a diagram illustrating an example of a human resources search process performed by a human resources matching system (a human resources matching system that allows a company to search for mid-career professionals) according to the first embodiment. In the present embodiment, in the first search process, when the request input reception unit 221 receives input data such as a type of occupation and a working arrangement, the first relevance calculation unit 22a searches for candidates based on the input data (request content 1). In the present embodiment, the second search process involves searching for candidates in accordance with detailed desired personnel conditions input as the first additional information (request content 2). The detailed desired personnel conditions includes, for example, career background, qualifications, achievements, skills, and the candidate's desired occupation. The first relevance calculation unit 22a may search for candidates in accordance with the plurality of detailed conditions in the request content 2 in addition to the request content 1.

FIG. 14 is a diagram illustrating an example of a real estate search process performed by a real estate search system according to the first embodiment. In the present embodiment, in the first search process, when the request input reception unit 221 receives input data such as condominiums or single-family homes, the first relevance calculation unit 22a searches for real estate candidates based on the input data (request content 1). In the present embodiment, the second search process involves searching for real estate candidates in accordance with detailed desired property conditions input as the first additional information (request content 2). The detailed desired real estate conditions includes, for example, information indicating the desired area, the nearest station, and the like, and the building age. The first relevance calculation unit 22a may search for real estate candidates in accordance with the plurality of detailed conditions in the request content 2 in addition to the request content 1.

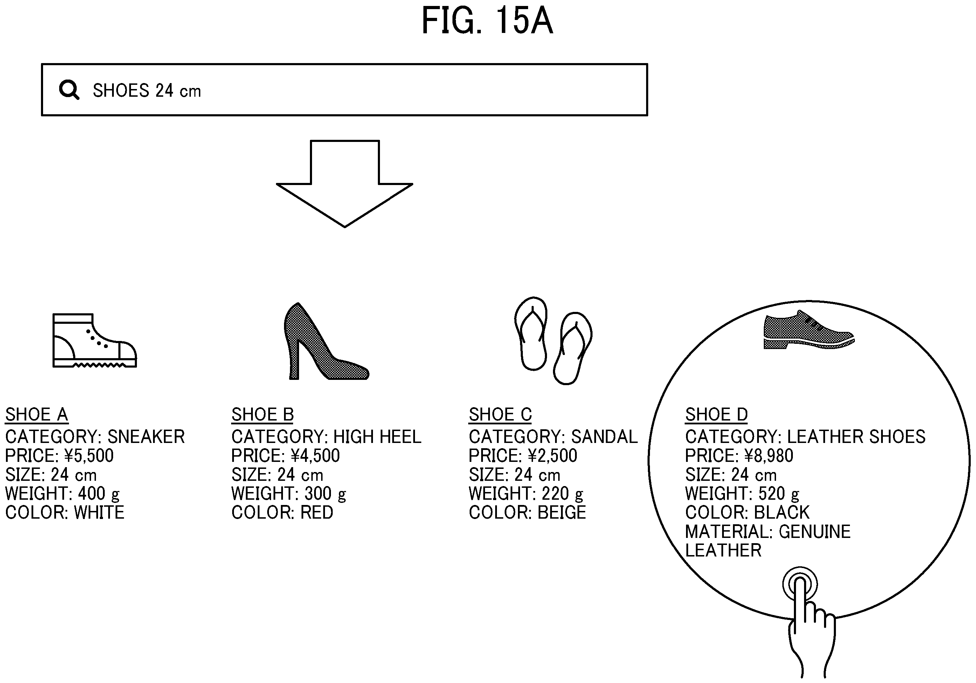

FIGs. 15A to 15C are diagrams illustrating examples of a product candidate display process based on the first search process performed by the product sales system according to the first embodiment. In the first search process, when the request input reception unit 221 receives input data such as a shoe size, the first manufacturer information display unit 22b displays shoe candidates (e.g., shoes A to D) satisfying the input shoe size.

The shoe candidates displayed by the first manufacturer information display unit 22b may be all of the shoe candidates satisfying the input data received by the request input reception unit 221 or may be a specified number of shoe candidates. In a case where a specified number of shoe candidates are to be displayed, when the number of shoe candidates satisfying the input data received by the request input reception unit 221 is greater than the specified number, the first manufacturer information display unit 22b preferably displays a number of shoe candidates equal to the specified number. This configuration allows the user to intuitively select a shoe candidate without checking a large number of search results. When the number of shoe candidates satisfying the input data received by the request input reception unit 221 is less than the specified number, the first manufacturer information display unit 22b preferably displays all of the shoe candidates satisfying the input data received by the request input reception unit 221.

The user can select at least one of the shoe candidates displayed by the first manufacturer information display unit 22b. In response to the user selecting a shoe candidate, the first input information is input to the first additional information input unit 22c. The user may select one shoe candidate or a plurality of shoe candidates among the shoe candidates displayed by the first manufacturer information display unit 22b. In the present embodiment, the user selects one of the shoe candidates displayed by the first manufacturer information display unit 22b. However, this is not limiting, and the user may select a plurality of shoe candidates.

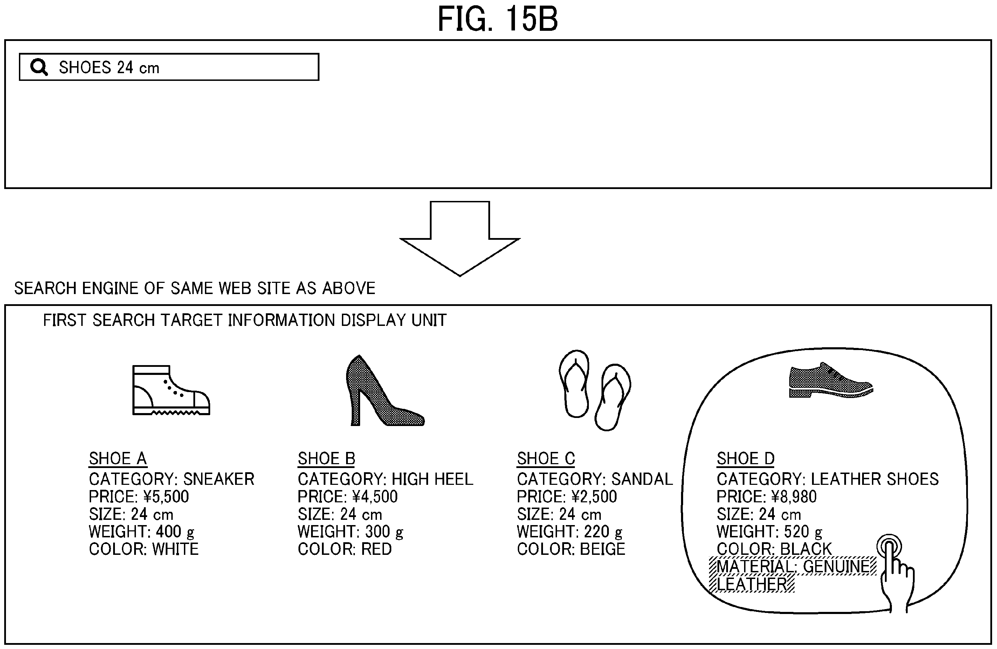

In the first search process, when the request input reception unit 221 receives input data such as a shoe size, as illustrated in FIG. 15B, the first manufacturer information display unit 22b may display shoe candidates found by a search engine of the same web site as the web site from which the input data is received. At this time, the first manufacturer information display unit 22b may display the shoe candidates in either the same tab or different tabs within the search engine of the web site from which the input data is received.

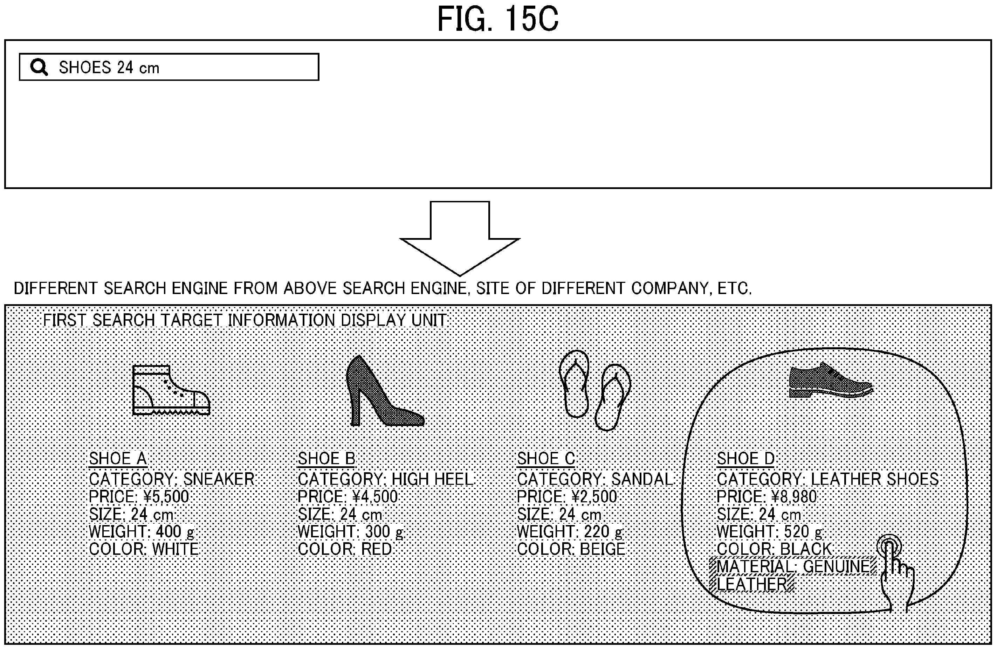

In first search process, when the request input reception unit 221 receives input data such as a shoe size, as illustrated in FIG. 15C, the first manufacturer information display unit 22b may display shoe candidates found by a search engine different from the search engine of the web site from which the input data is received or by a site of another company incorporating the matching system according to the present embodiment.

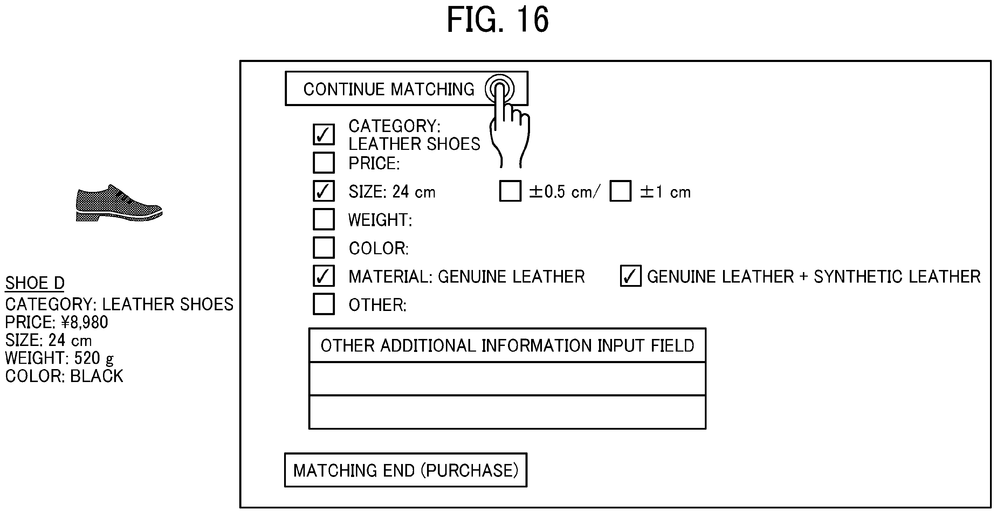

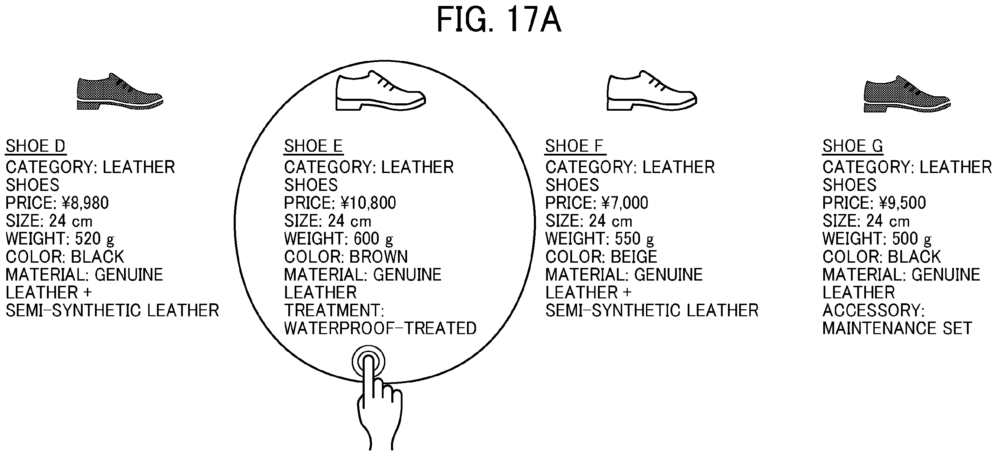

FIGs. 16 and 17A are diagrams illustrating examples of a product candidate search process based on the second search process performed by the product sales system according to the first embodiment. In the second search process, as illustrated in FIG. 16, at least one shoe candidate (e.g., the shoe D) is selected from among the shoe candidates found in the first search process, and the first additional information (e.g., category, price, size, weight, color, and other information) is input to the first additional information input unit 22c based on the selection result. In the second search process, furthermore, the second relevance calculation unit 22d searches for a shoe candidate based on the selected shoe candidate and the first additional information. At this time, when the shoe D is determined to be the best and a matching end button is pressed, the search termination input acceptance unit 22m accepts the selection of the termination of the shoe search. If the matching end button is not pressed, in the second search process, as illustrated in FIG. 17A, the second manufacturer information display unit 22e displays the selected shoe candidate and shoe candidates found based on the first additional information (e.g., the shoe D and shoes E to G). In the present embodiment, at least one shoe candidate (e.g., the shoe D) selected from among the shoe candidates found in the first search process may be displayed together with the shoe candidates (e.g., the shoes E to G) found based on the selected shoe candidate and the first additional information in the second search process. The candidate selected in the previous search process is displayed as a candidate in the next search process and is selectable. This enables the shoe candidates obtained based on the first additional information to be visually compared with, as a reference, the candidate selected by the user in the previous search process. The present embodiment has the configuration as described above from the viewpoint of displaying a reference and a comparison target for the user to select a shoe candidate. However, it is possible to select as appropriate whether to use this configuration.

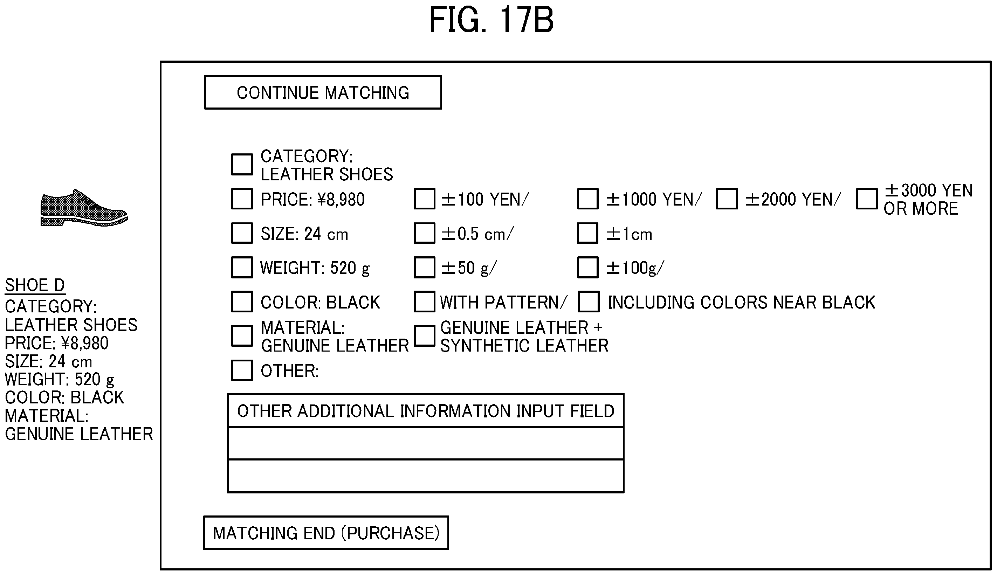

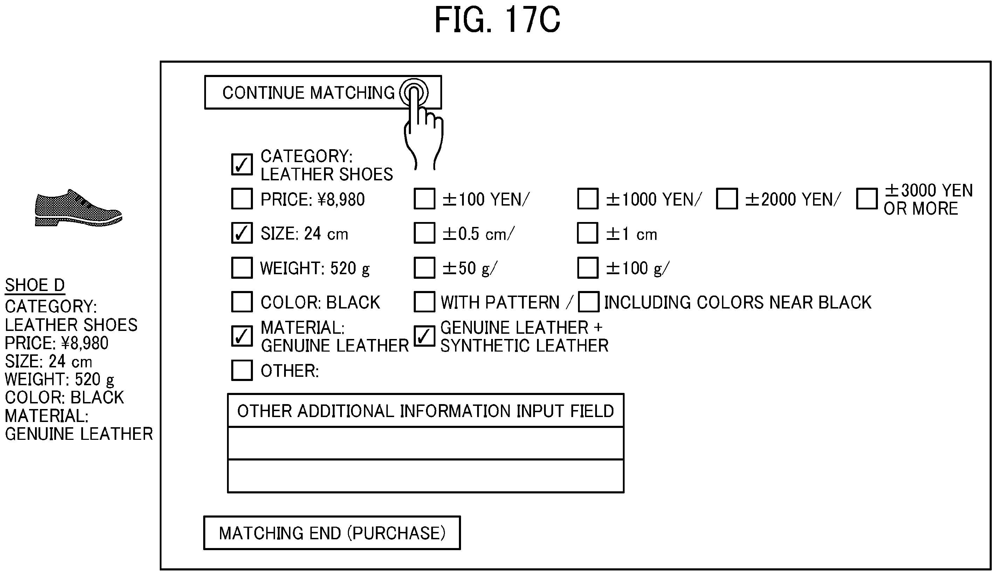

FIGs. 17B and 17C are diagrams illustrating examples of a screen for a shoe candidate search process based on the second search process performed by the product sales system according to the first embodiment. As illustrated in FIG. 17B, the third manufacturer information display unit 22h displays the items of the detailed information (e.g., category, price, size, weight, color, material, and other information) of the shoe candidate selected by the user. At this time, in addition to the items of the detailed information, information on the product itself associated with the items of the detailed information is also displayed. The displayed information may be in a form that allows the user to add information or modify the information or to, as illustrated in FIG. 17C, select an allowable range with a checkbox or the like.

With the configuration that allows the user to add information or modify the first additional information input to the first additional information input unit 22c, a shoe candidate desired by the user is easily obtained with a few trials. In addition, with the configuration that allows the user to select an allowable range with a checkbox or the like, a wider range of search targets can be searched within the allowable range. Thus, a more preferable shoe candidate that the user is unaware of is easily obtained.

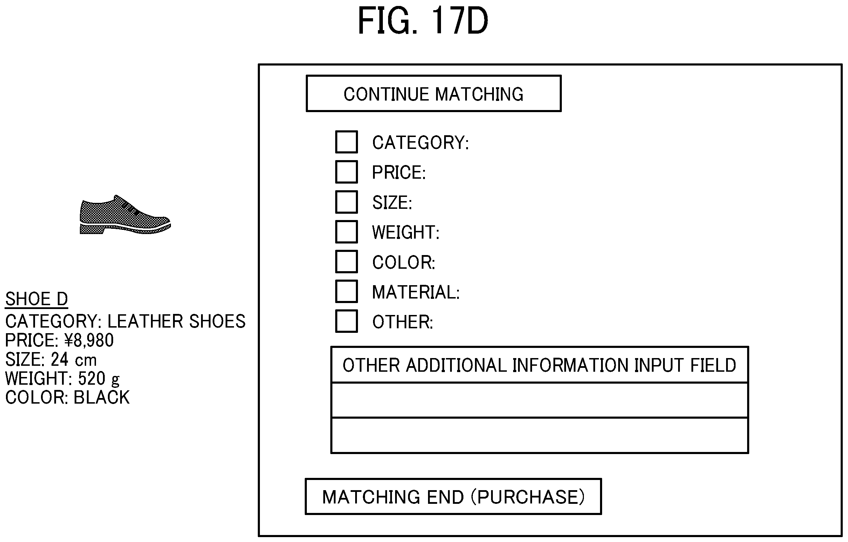

FIG. 17D is a diagram illustrating another example of the screen for the shoe candidate search process based on the second search process performed by the product sales system according to the first embodiment. As illustrated in FIG. 17D, the third manufacturer information display unit 22h displays the items of the detailed information of the shoe candidate selected by the user. For example, when the user checks a checkbox displayed by the third manufacturer information display unit 22h 22c, information on the product itself associated with the items of the detailed information of the shoe candidate selected by the user is also displayed. The operation of checking a checkbox by the user is also included in the input of the first additional information. As illustrated in FIG. 17D, displaying the items of the detailed information without the associated information reduces the amount of information on the screen displayed by the first additional information input unit 22c, which makes the user less stressed. In addition, it is possible to save the user from manually deleting information that has already been input when the user adds information or modifies the first additional information.

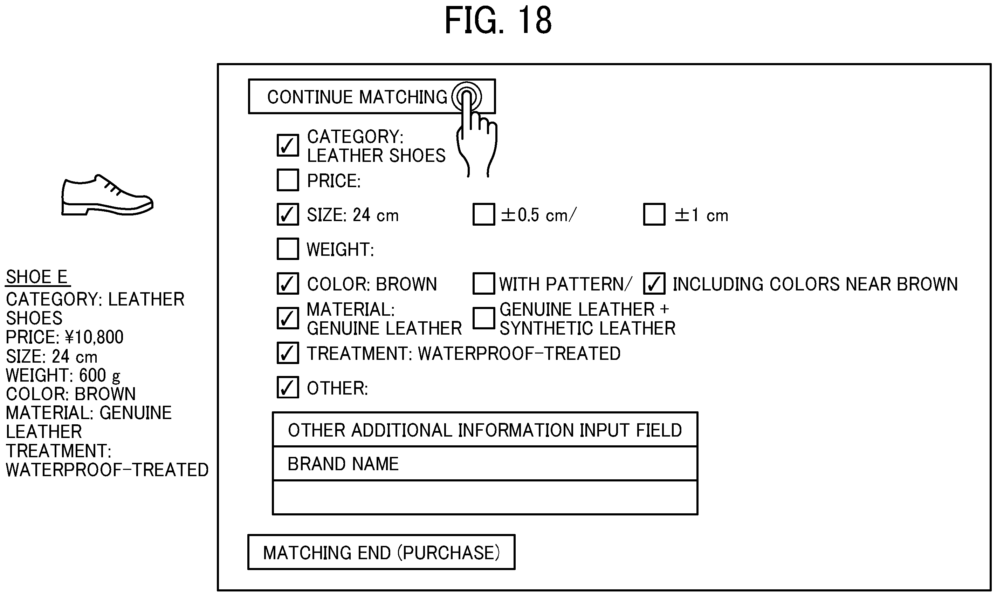

FIGs. 18 to 20A are diagrams illustrating examples of a product candidate search process based on the third search process performed by the product sales system according to the first embodiment. In the third search process, a shoe candidate (e.g., the shoe E) is selected from among the shoe candidates found in the second search process, and, as illustrated in FIG. 18, the second additional information (e.g., category, size, color, material, and other information) is input to the second additional information input unit 22f. As illustrated in FIG. 18, the second additional information input unit 22f may be configured to automatically receive, as an input, the content input to the first additional information input unit 22c. This configuration saves the user from again inputting information input to the first additional information input unit 22c. Some users wish to store information input to the first additional information input unit 22c, and other users wish to perform the third search process under conditions different from those for the information input to the first additional information input unit 22c. Thus, it is preferable to provide a button that allows collective input of the additional information used in the previous search. At this time, when the shoe E is determined to be the best and the matching end button is pressed, the search termination input acceptance unit 22m accepts the selection of the termination of the shoe search.

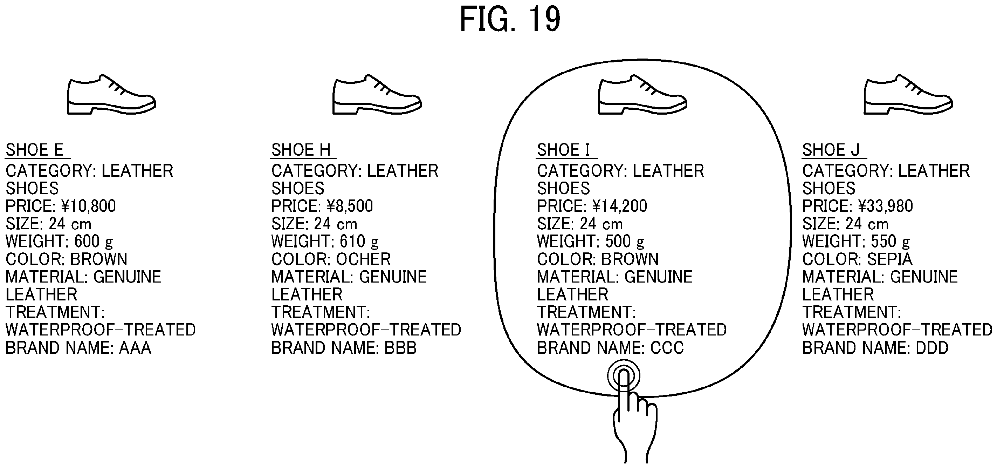

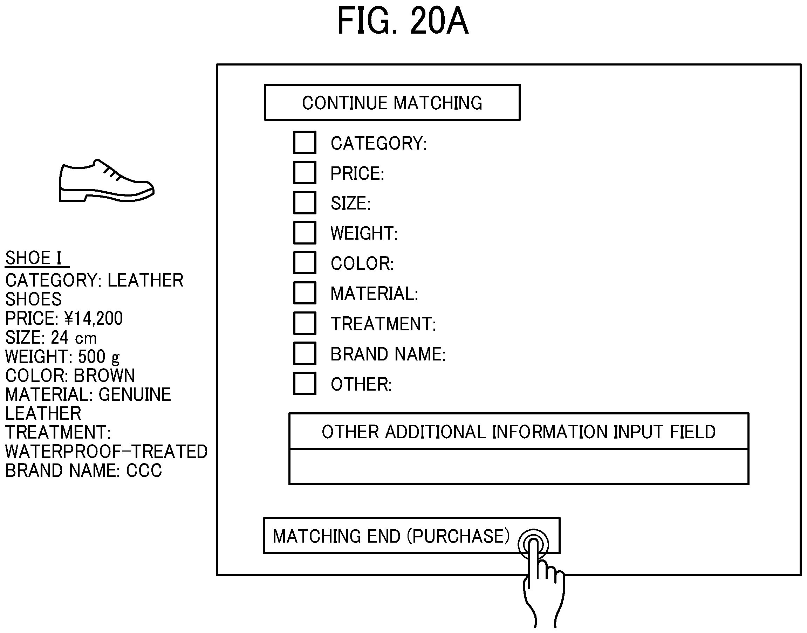

If the matching end button is not pressed, in the third search process, the third relevance calculation unit 22g searches shoe candidates (e.g., the shoe E and shoes H to J) based on the selected shoe candidate and the second additional information. In the third search process, as illustrated in FIG. 19, the third manufacturer information display unit 22h displays the found shoe candidates. After that, as illustrated in FIG. 20A, the manufacturer selection unit 22j selects a shoe (e.g., the shoe I) from among the shoe candidates displayed by the third manufacturer information display unit 22h. Then, when the shoe I is determined to be the best and the matching end button is pressed, the search termination input acceptance unit 22m accepts the selection of the termination of the shoe search. After the matching end button is pressed and the selection of the termination of the search is accepted, the user may be guided to a page to make a purchase of the selected shoe candidate. This configuration enables the matching operation and the product purchase operation to be associated with each other. In the present embodiment, the user selects one of the shoe candidates. In another embodiment, the user may select a plurality of shoe candidates.

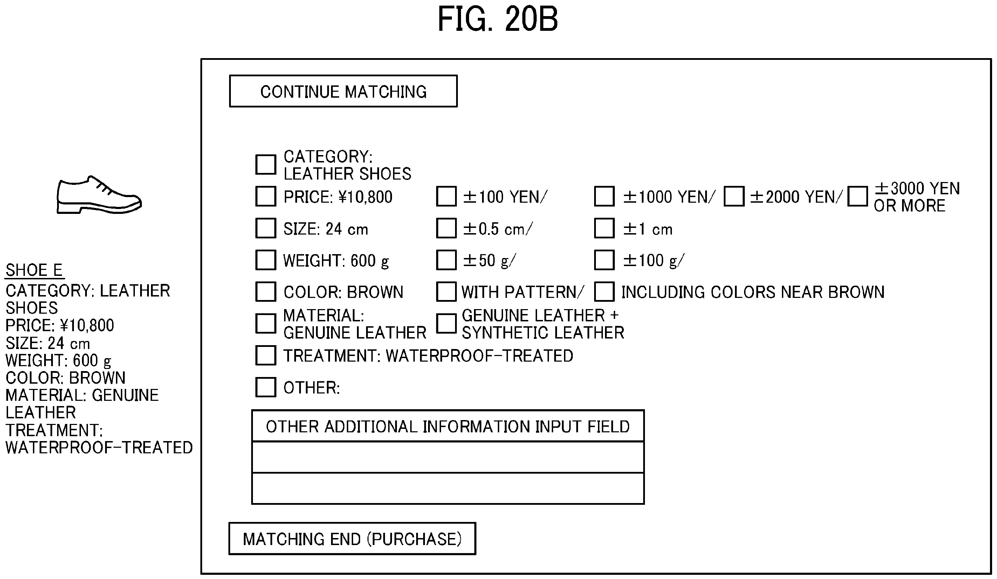

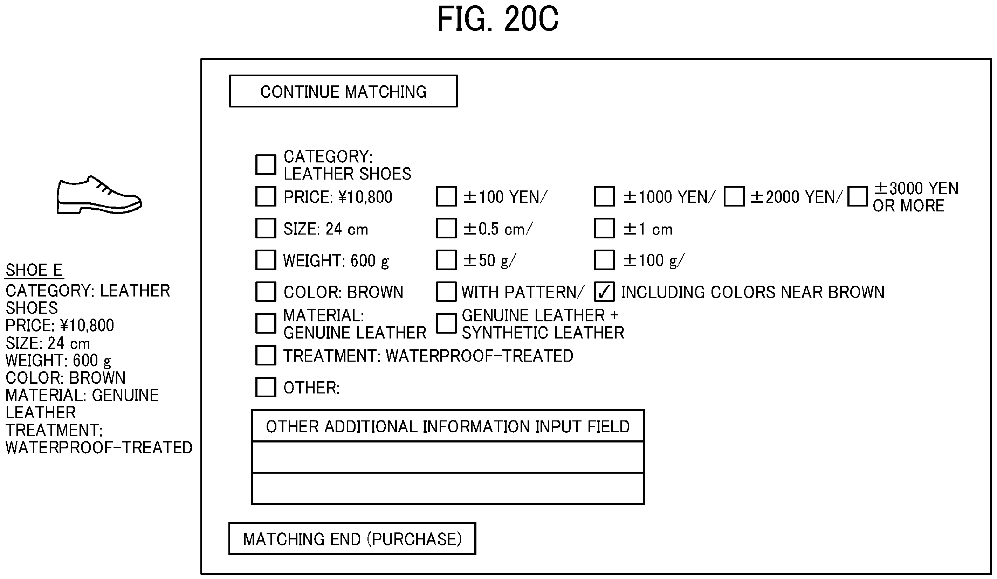

FIGs. 20B to 20D are diagrams illustrating examples of a screen for a shoe candidate search process based on the third search process performed by the product sales system according to the first embodiment. As illustrated in FIG. 20B, the fourth manufacturer information display unit 22i displays the items of the detailed information (e.g., category, price, size, weight, color, material, and other information) of the shoe candidate selected by the user. At this time, in addition to the items of the detailed information, information on the product itself associated with the items of the detailed information is also displayed. The displayed information may be in a form that allows the user to add information or modify the information or to, as illustrated in FIG. 20C, select an allowable range with a checkbox or the like.

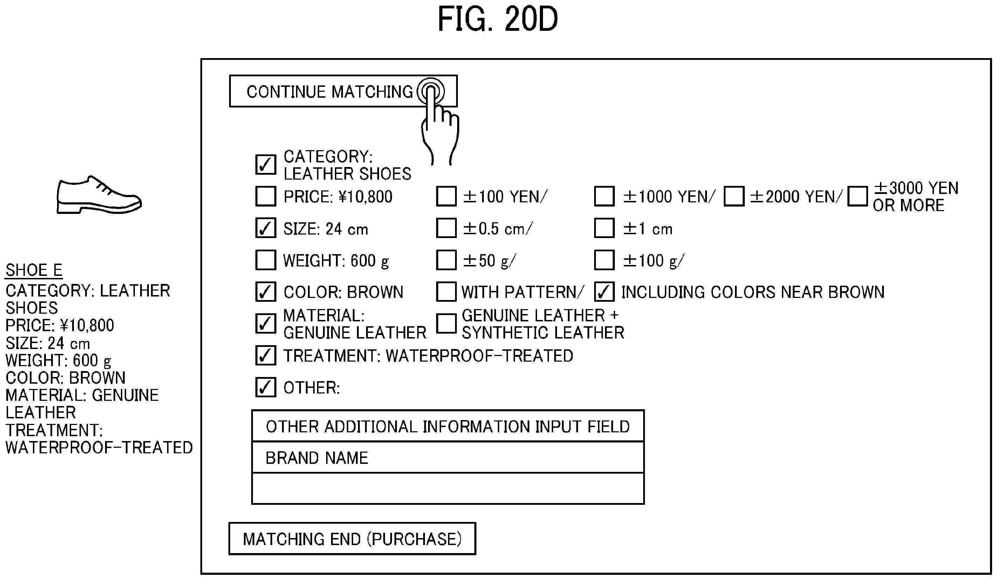

With the configuration that allows the user to add information or modify the second additional information input to the second additional information input unit 22f, a shoe candidate desired by the user is easily obtained with a few trials. In addition, with the configuration that allows the user to select an allowable range with a checkbox or the like, a wider range of search targets can be searched within the allowable range. Thus, a more preferable shoe candidate that the user is unaware of is easily obtained. At this time, as illustrated in FIG. 20D, the second additional information input unit 22f may be configured to automatically receive, as an input, the content input to the first additional information input unit 22c.

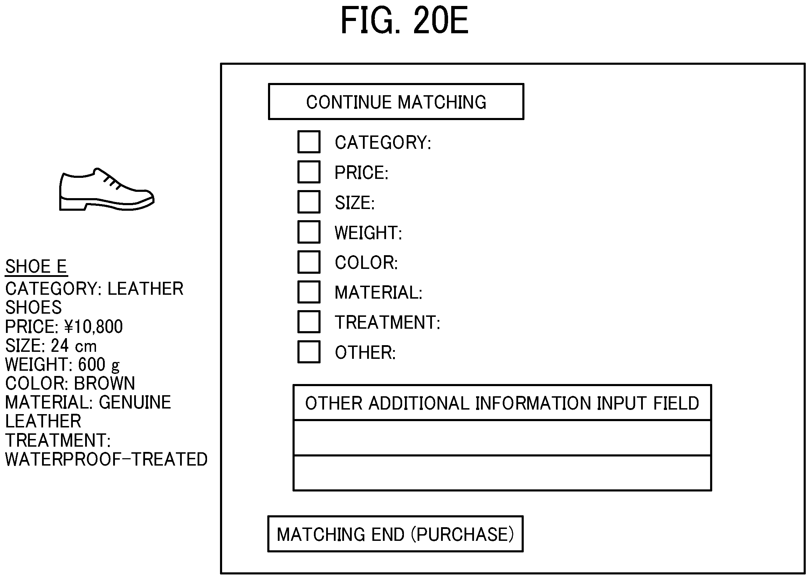

FIG. 20E is a diagram illustrating another example of the screen for the shoe candidate search process based on the third search process performed by the product sales system according to the first embodiment. As illustrated in FIG. 20E, the fourth manufacturer information display 22i displays the items of the detailed information of the shoe candidate selected by the user. For example, when the user checks a checkbox displayed by the second additional information input unit 22f, information on the product itself associated with the items of the detailed information of the shoe candidate selected by the user is also displayed. The operation of checking a checkbox by the user is also included in the input of the second additional information. Displaying the items of the detailed information without the associated information reduces the amount of information on the screen displayed by the second additional information input unit 22f, which makes the user less stressed. In addition, it is possible to save the user from manually deleting information that has already been input when the user adds information or modifies the second additional information.

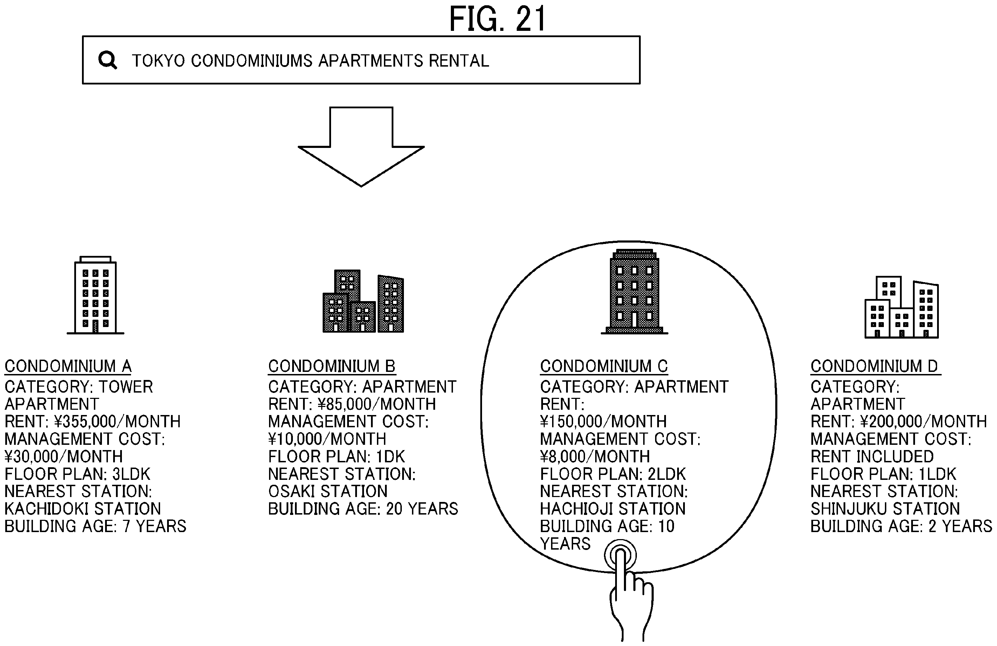

FIG. 21 is a diagram illustrating an example of a real estate candidate display process based on the first search process performed by the real estate search system according to the first embodiment. In the first search process, when the request input reception unit 221 receives input data (e.g., Tokyo, condominiums, apartments, and rental), the first manufacturer information display unit 22b displays real estate candidates (e.g., condominiums A to D) satisfying the input data.

The real estate candidates displayed by the first manufacturer information display unit 22b may be all of the real estate candidates satisfying the input data received by the request input reception unit 221 or may be a specified number of real estate candidates. In a case where a specified number of real estate candidates are to be displayed, when the number of real estate candidates satisfying the input data received by the request input reception unit 221 is greater than the specified number, the first manufacturer information display unit 22b preferably displays a number of real estate candidates equal to the specified number. This configuration allows the user to intuitively select a real estate candidate without checking a large number of search results. When the number of real estate candidates satisfying the input data received by the request input reception unit 221 is less than the specified number, the first manufacturer information display unit 22b preferably displays all of the real estate candidates satisfying the input data received by the request input reception unit 221.

The user can select at least one of the real estate candidates displayed by the first manufacturer information display unit 22b. In response to the user selecting a real estate candidate, the first input information is input to the first additional information input unit 22c. The user may select one real estate candidate or a plurality of real estate candidates among the real estate candidates displayed by the first manufacturer information display unit 22b. In the present embodiment, the user selects one of the real estate candidates displayed by the first manufacturer information display unit 22b. However, this is not limiting, and the user may select a plurality of real estate candidates.

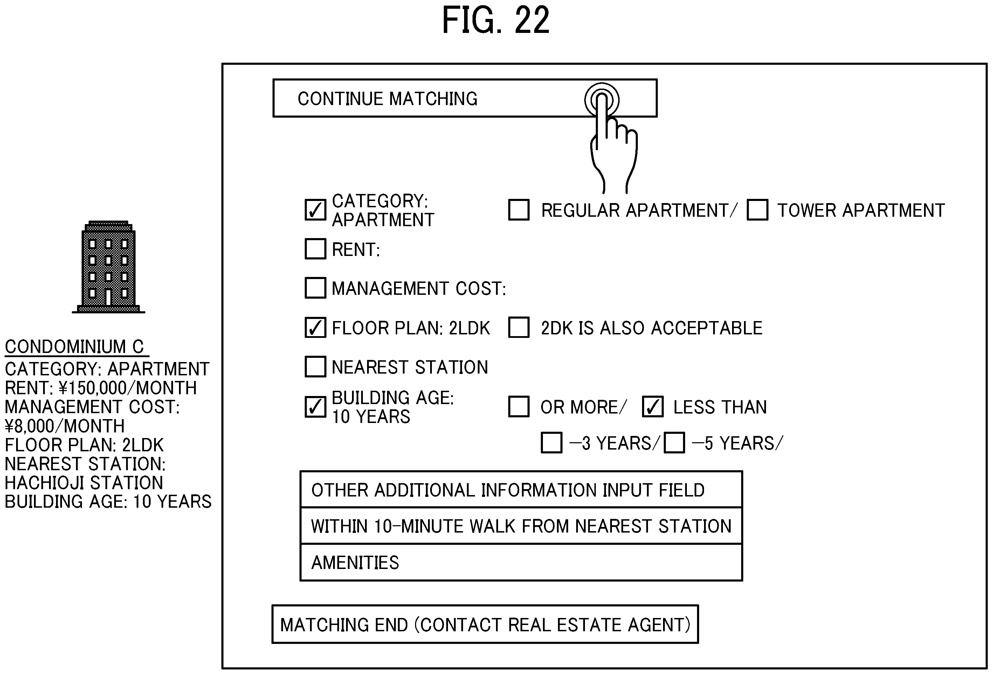

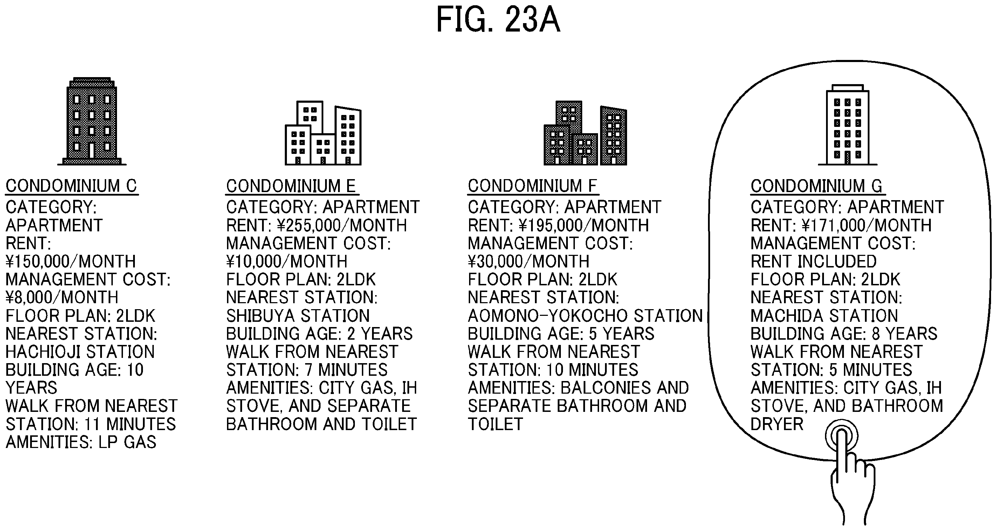

FIGs. 22 and 23A are diagrams illustrating examples of a real estate candidate search process based on the second search process performed by the real estate search system according to the first embodiment. In the second search process, at least one real estate candidate (e.g., the condominium C) is selected from among the real estate candidates found in the first search process, and the first additional information (e.g., category, rent, management cost, floor plan, nearest station, and building age) is input to the first additional information input unit 22c based on the selection result. In the second search process, furthermore, the second relevance calculation unit 22d searches for a real estate candidate based on the selected real estate candidate and the first additional information. At this time, when the condominium C is determined to be the best and the matching end button is pressed, the search termination input acceptance unit 22m accepts the selection of the termination of the real estate search. If the matching end button is not pressed, in the second search process, the second manufacturer information display unit 22e displays the selected real estate candidate and real estate candidates found based on the first additional information (e.g., the condominium C and condominiums E to G). In the present embodiment, at least one real estate candidate (e.g., the condominium C) selected from among the real estate candidates found in the first search process may be displayed together with the real estate candidates (e.g., the condominiums E to G) found based on the selected real estate candidate and the first additional information in the second search process. The candidate selected in the previous search process is displayed as a candidate in the next search process and is selectable. This enables the real estate candidates obtained based on the first additional information to be visually compared with, as a reference, the candidate selected by the user in the previous search process. The present embodiment has the configuration as described above from the viewpoint of displaying a reference and a comparison target for the user to select a real estate candidate. However, it is possible to select as appropriate whether to use this configuration.

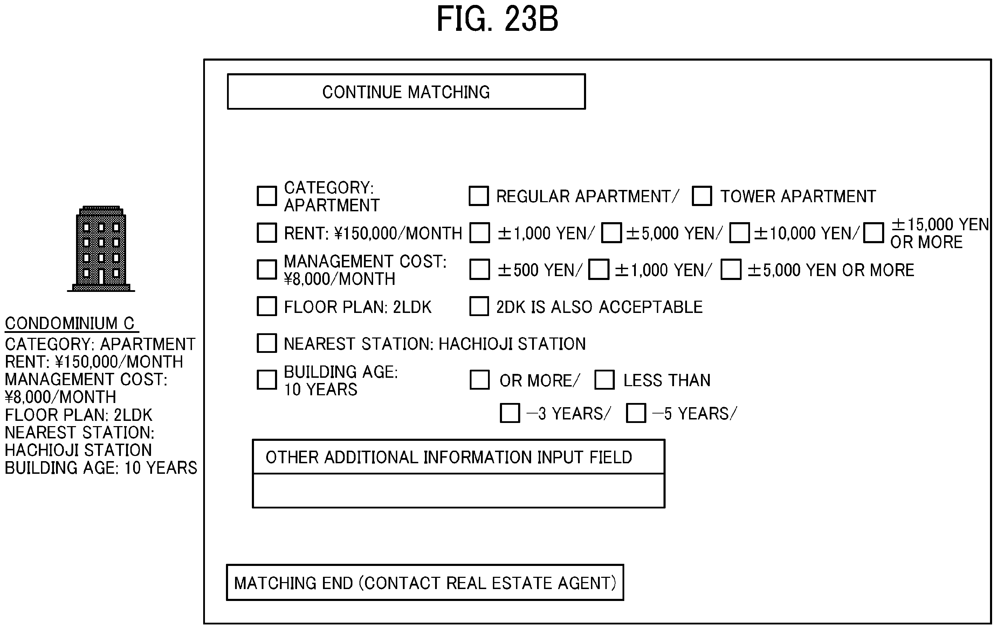

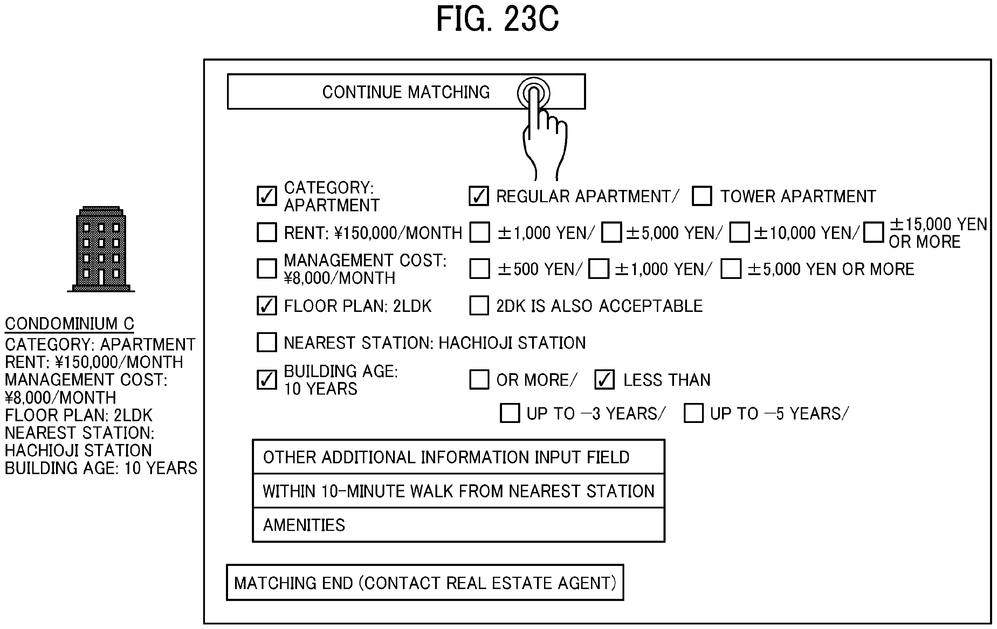

FIGs. 23B and 23C are diagrams illustrating examples of a screen for a real estate candidate search process based on the second search process performed by the real estate search system according to the first embodiment. As illustrated in FIG. 23B, the third manufacturer information display unit 22h displays the items of the detailed information (e.g., category, rent, management cost, floor plan, nearest station, building age, and other information) of the real estate candidate selected by the user. At this time, in addition to the items of the detailed information, information on the real estate itself associated with the items of the detailed information is also displayed. The displayed information may be in a form that allows the user to add information or modify the information or to, as illustrated in FIG. 23C, select an allowable range with a checkbox or the like.

With the configuration that allows the user to add information or modify the first additional information input to the first additional information input unit 22c, a real estate candidate desired by the user is easily obtained with a few trials. In addition, with the configuration that allows the user to select an allowable range with a checkbox or the like, a wider range of search targets can be searched within the allowable range. Thus, a more preferable real estate candidate that the user is unaware of is easily obtained.

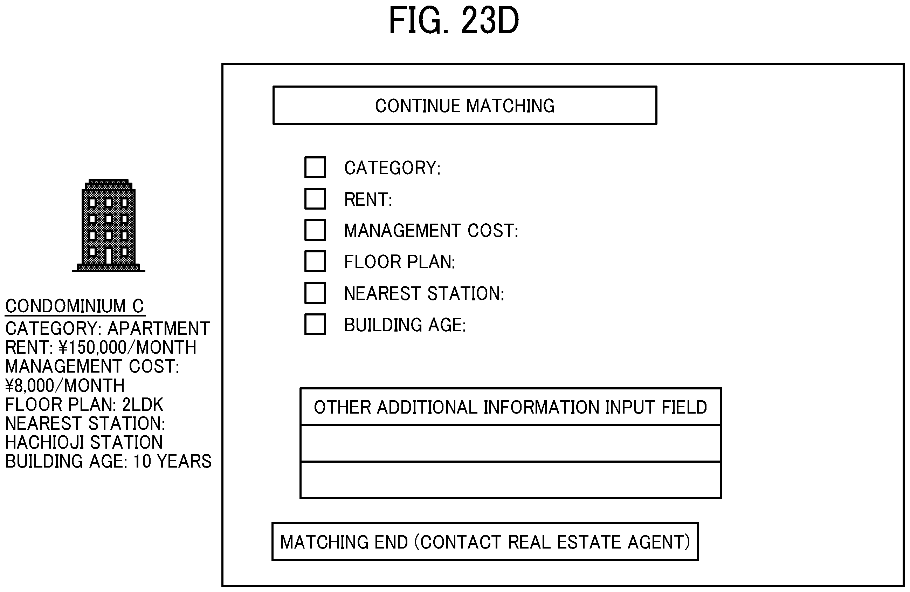

FIG. 23D is a diagram illustrating another example of the screen for the real estate candidate search process based on the second search process performed by the real estate search system according to the first embodiment. As illustrated in FIG. 23D, the third manufacturer information display unit 22h displays the items of the detailed information of the real estate candidate selected by the user. For example, when the user checks a checkbox displayed by the first additional information input unit 22c, information on the real estate itself associated with the items of the detailed information of the real estate candidate selected by the user is also displayed. The operation of checking a checkbox by the user is also included in the input of the first additional information. As illustrated in FIG. 23D, displaying the items of the detailed information without the associated information reduces the amount of information on the screen displayed by the first additional information input unit 22c, which makes the user less stressed. In addition, it is possible to save the user from manually deleting information that has already been input when the user adds information or modifies the first additional information.

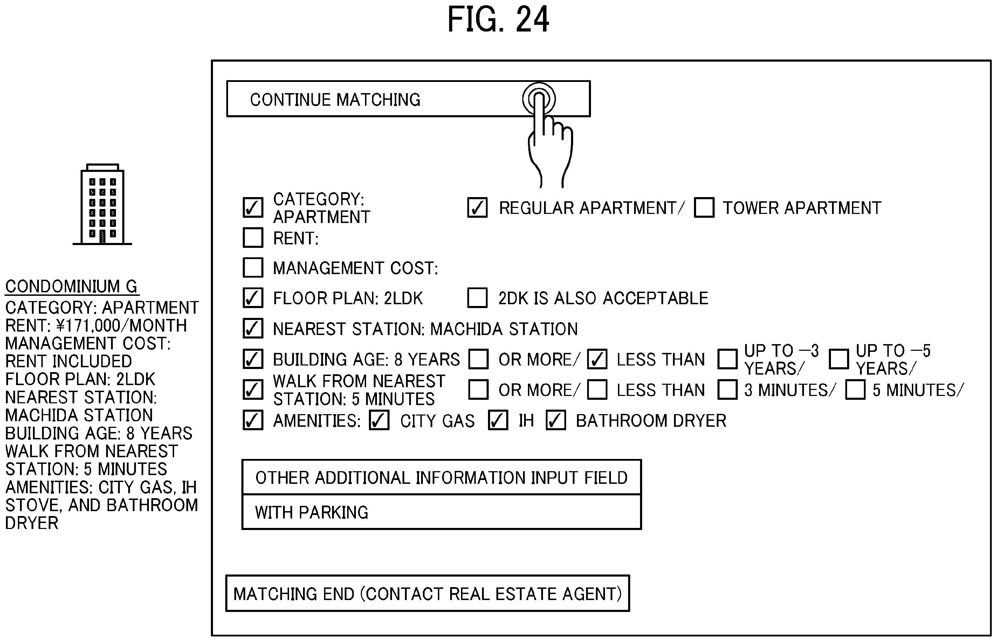

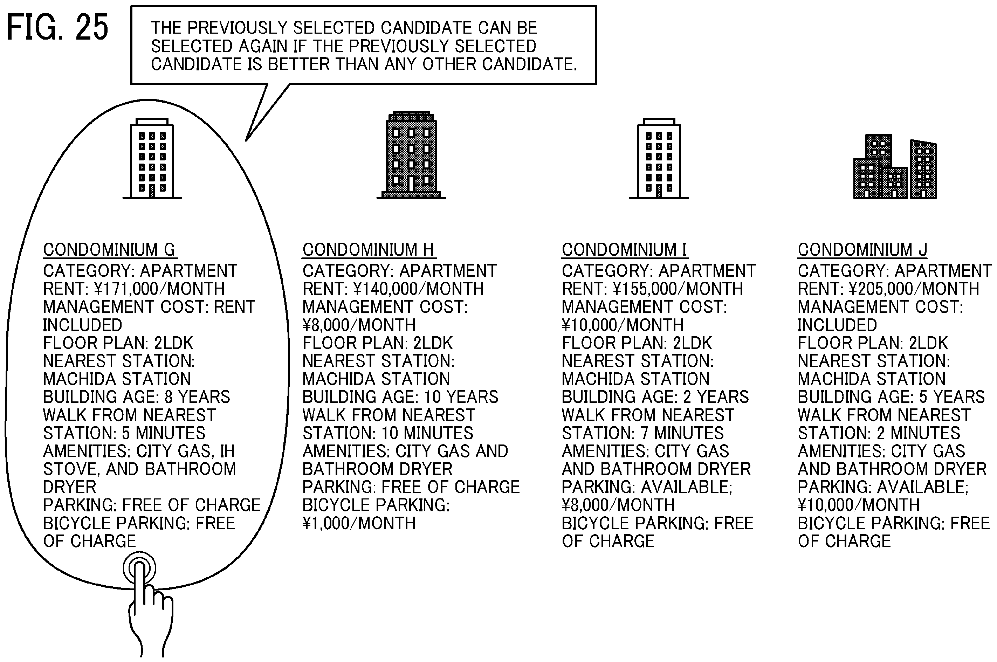

FIGs. 24 to 26B are diagram illustrating examples of a real estate candidate search process based on the third search process performed by the real estate search system according to the first embodiment. In the third search process, as illustrated in FIG. 24, a real estate candidate (e.g., the condominium G) is selected from among the real estate candidates found in the second search process, and the second additional information (e.g., category, rent, management cost, floor plan, nearest station, building age, walk from nearest station, and amenities) is input to the second additional information input unit 22f. The second additional information input unit 22f may be configured to automatically receive, as an input, the content input to the first additional information input unit 22c. This configuration saves the user from again inputting information input to the first additional information input unit 22c. Some users wish to store information input to the first additional information input unit 22c, and other users wish to perform the third search process under conditions different from those for the information input to the first additional information input unit 22c. Thus, it is preferable to provide a button that allows collective input of the additional information used in the previous search. At this time, when the condominium G is determined to be the best and the matching end button is pressed, the search termination input acceptance unit 22m accepts the selection of the termination of the real estate search. In FIG. 25, the same real estate candidate as that selected in FIG. 23A is selected. In the present embodiment, the same real estate candidate as that selected in the previous operation can be selected, and an additional condition different from that in the previous operation can be input. This configuration allows the user to perform a search process under a different additional condition, starting from the same real estate candidate as that selected in the previous operation, without returning to the previous page. Through this operation, real estate candidates different from the real estate candidates displayed in the previous operation can be displayed.

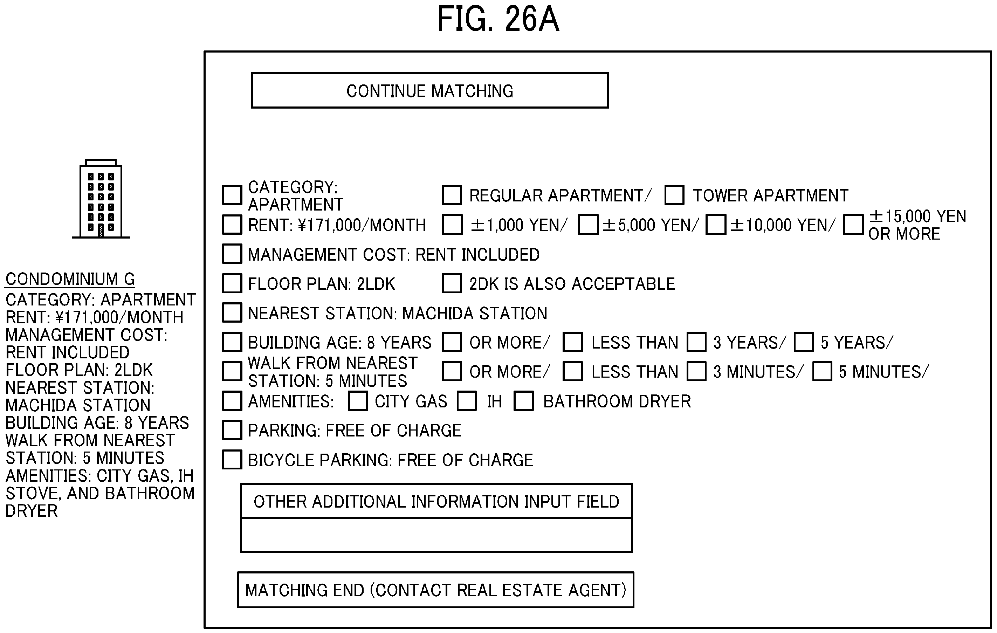

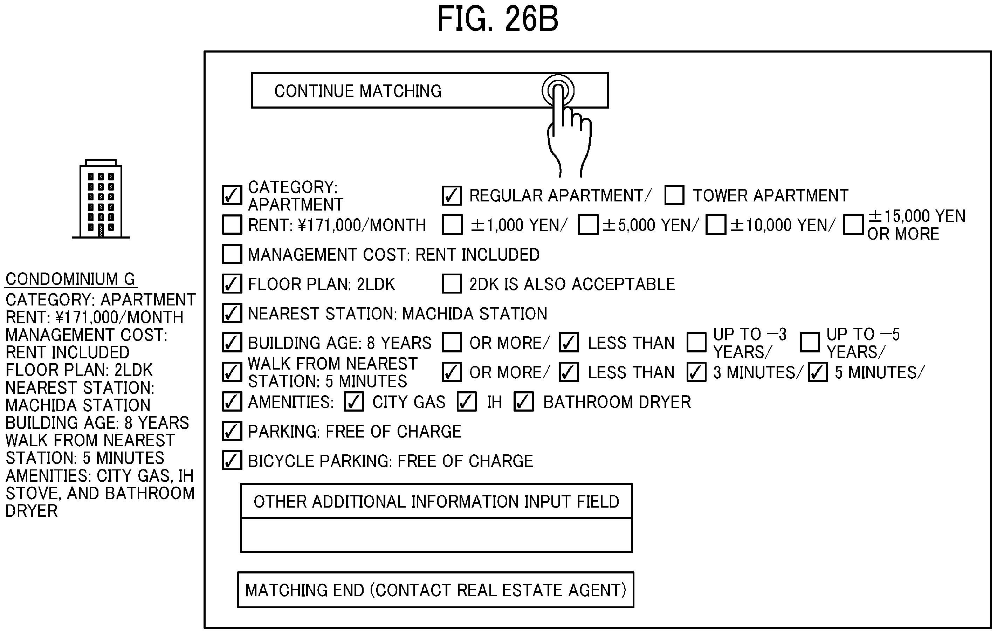

If the matching end button is not pressed, in the third search process, the third relevance calculation unit 22g searches real estate candidates (e.g., the condominium G and condominiums H to J) based on the selected real estate candidate and the second additional information. In the third search process, as illustrated in FIG. 25, the third manufacturer information display unit 22h displays the found real estate candidates. After that, as illustrated in FIG. 26A, the manufacturer selection unit 22j selects real estate (e.g., the condominium G) from among the real estate candidates displayed by the third manufacturer information display unit 22h. At this time, as illustrated in FIG. 26B, the second additional information input unit 22f may be configured to automatically receive, as an input, the content input to the first additional information input unit 22c. When the condominium G is determined to be the best and the matching end button is pressed, the search termination input acceptance unit 22m accepts the selection of the termination of the real estate search. After the matching end button is pressed and the selection of the termination of the search is accepted, the user may be guided to a page to contract the selected real estate candidate. This configuration enables the matching operation and the real estate contract operation to be associated with each other. In the present embodiment, the user selects one of the real estate candidates. In another embodiment, the user may select a plurality of real estate candidates.

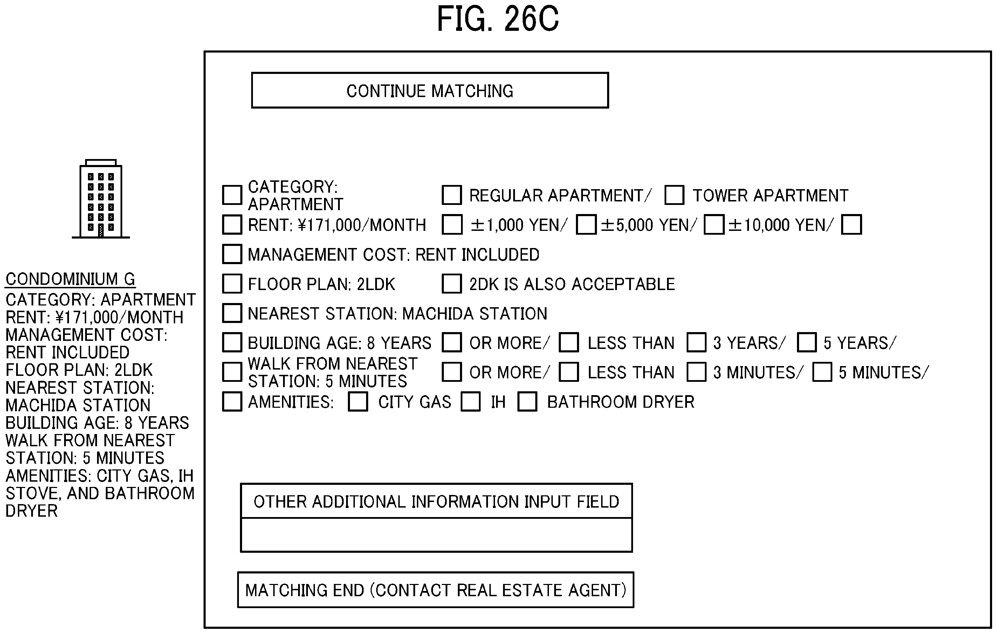

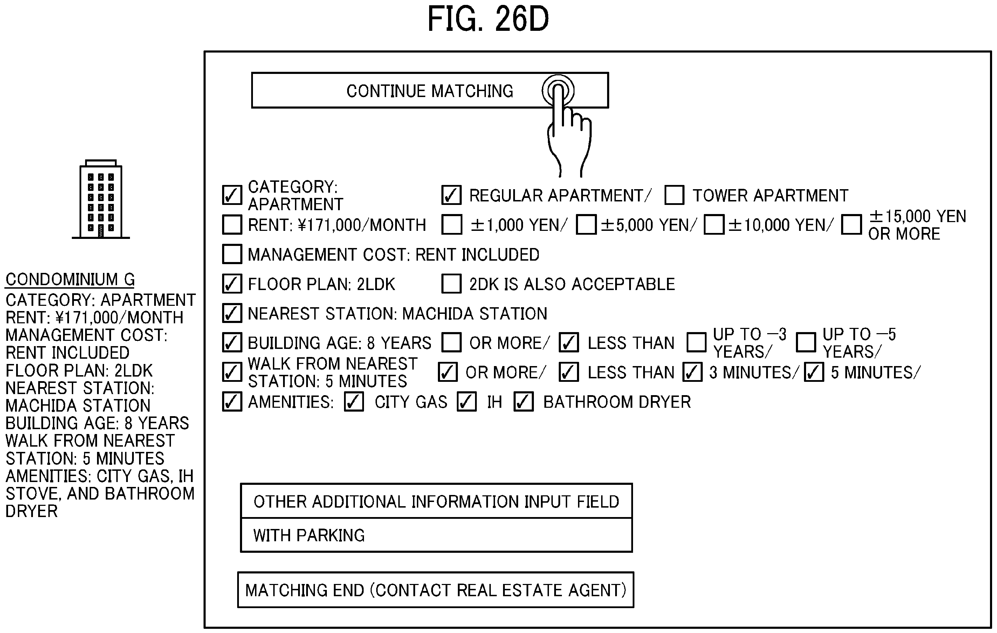

FIGs. 26C to 26E are diagrams illustrating examples of a screen for a real estate candidate search process based on the third search process performed by the real estate search system according to the first embodiment. As illustrated in FIG. 26C, the fourth manufacturer information display unit 22i displays the items of the detailed information (e.g., category, rent, management cost, floor plan, nearest station, building age, walk from nearest station, amenities, and other information) of the real estate candidate selected by the user. At this time, in addition to the items of the detailed information, information on the real estate itself associated with the items of the detailed information is also displayed. The displayed information may be in a form that allows the user to add information or modify the information or to, as illustrated in FIG. 26D, select an allowable range with a checkbox or the like.

With the configuration that allows the user to add information or modify the second additional information input to the second additional information input unit 22f, a real estate candidate desired by the user is easily obtained with a few trials. In addition, as illustrated in FIG. 26D, with the configuration that allows the user to select an allowable range with a checkbox or the like, a wider range of search targets can be searched within the allowable range. Thus, a more preferable real estate candidate that the user is unaware of is easily obtained.

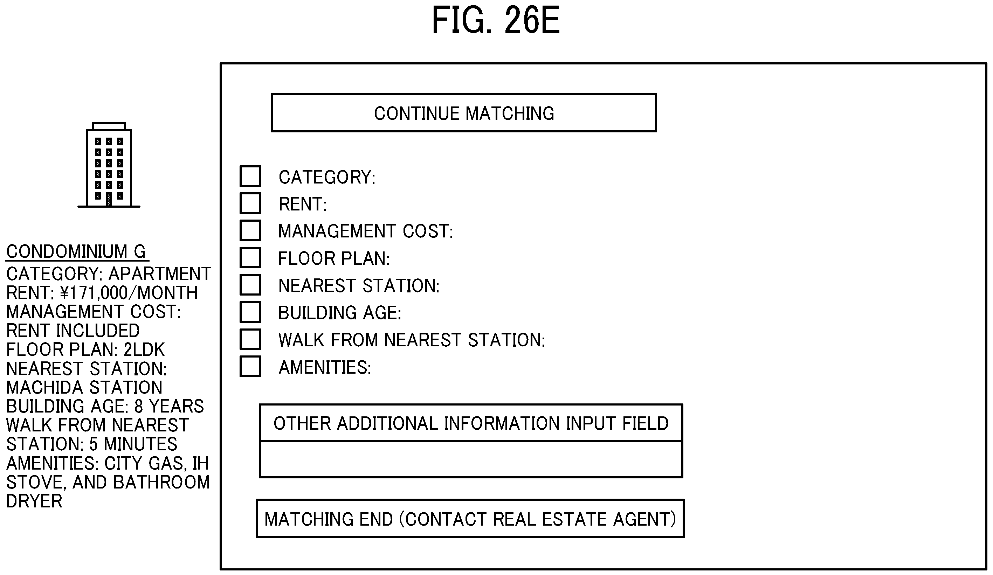

FIG. 26E is a diagram illustrating another example of the screen for the real estate candidate search process based on the third search process performed by the real estate search system according to the first embodiment. As illustrated in FIG. 26E, the fourth manufacturer information display unit 22i displays the items of the detailed information of the real estate candidate selected by the user. For example, when the user checks a checkbox displayed by the second additional information input unit 22f, information on the real estate itself associated with the items of the detailed information of the real estate candidate selected by the user is also displayed. The operation of checking a checkbox by the user is also included in the input of the second additional information. As illustrated in FIG. 26E, displaying the items of the detailed information without the associated information reduces the amount of information on the screen displayed by the second additional information input unit 22f, which makes the user less stressed. In addition, it is possible to save the user from manually deleting information that has already been input when the user adds information or modifies the second additional information.

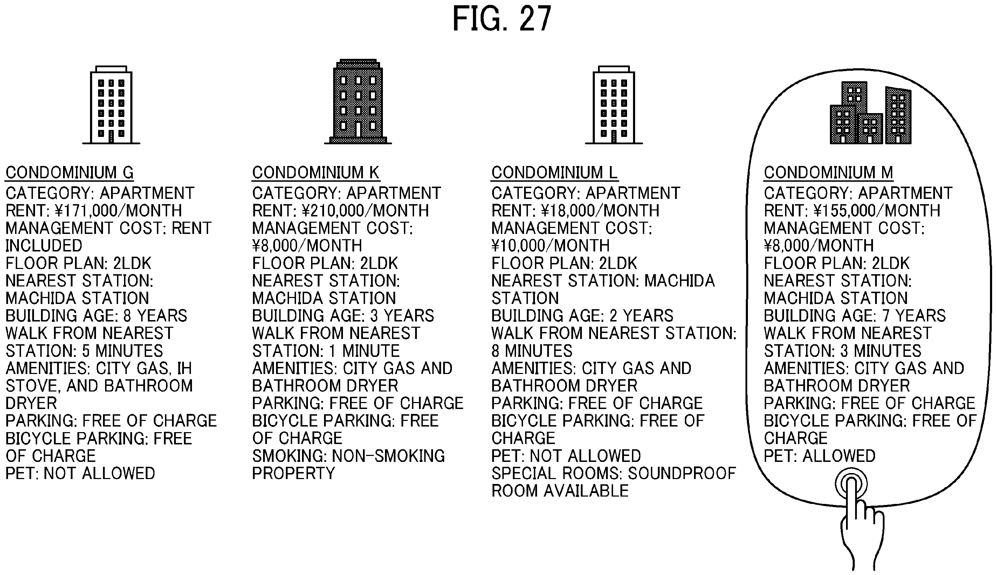

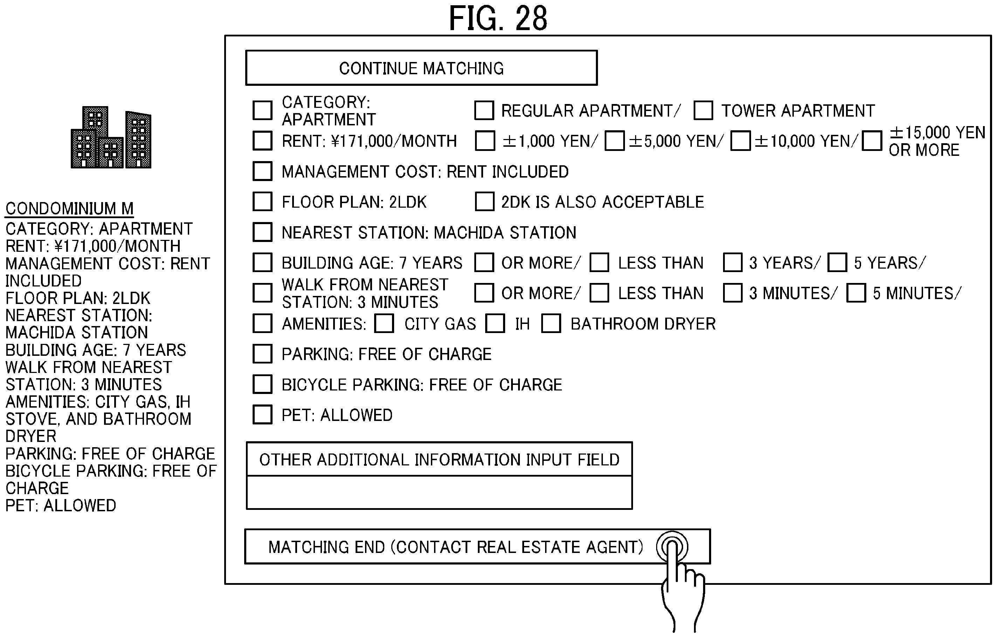

FIGs. 27 and 28 are diagrams illustrating examples of a real estate candidate search process performed by the real estate search system according to the first embodiment. On the second additional information input unit 22f, from among the real estate candidates (e.g., the condominium G and condominiums K, L, and M) found in the third search process, a real estate candidate (e.g., the condominium M) is selected, and additional information (e.g., category, rent, management cost, floor plan, nearest station, building age, walk from nearest station, and amenities) is input. At this time, when the condominium M is determined to be the best and the matching end button is pressed, the search termination input acceptance unit 22m accepts the selection of the termination of the real estate search.

If the matching end button is not pressed, the third relevance calculation unit 22g searches real estate candidates based on the selected real estate candidate and the additional information. Further, the fourth manufacturer information display unit 22i displays the found real estate candidates. After that, the manufacturer selection unit 22j selects real estate (e.g., the condominium M) from among the real estate candidates displayed by the fourth manufacturer information display unit 22i. When the condominium M is determined to be the best and the matching end button is pressed, the search termination input acceptance unit 22m accepts the selection of the termination of the real estate search. After the matching end button is pressed and the selection of the termination of the search is accepted, the user may be guided to a page to communicate with or contact a real estate company that handles the selected real estate candidate. This configuration enables the matching operation and the communication operation to be associated with each other.

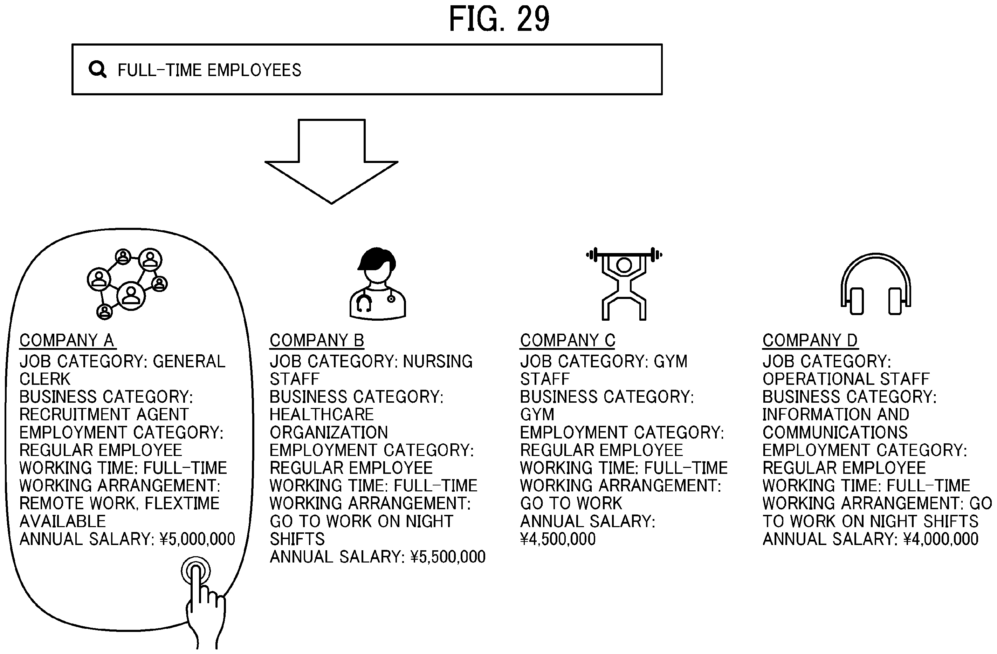

FIG. 29 is a diagram illustrating an example of an employer candidate display process based on the first search process performed in the human resources matching service according to the first embodiment. **In** the first search process, when the request input reception unit 221 receives input data (e.g., full-time employees), the first manufacturer information display unit 22b displays employer candidates (e.g., Companies A to D) satisfying the input data.

The employer candidates displayed by the first manufacturer information display unit 22b may be all of the employer candidates satisfying the input data received by the request input reception unit 221 or may be a specified number of employer candidates. **In** a case where a specified number of employer candidates are to be displayed, when the number of employer candidates satisfying the input data received by the request input reception unit 221 is greater than the specified number, the first manufacturer information display unit 22b preferably displays a number of employer candidates equal to the specified number. This configuration allows the user to intuitively select an employer candidate without checking a large number of search results. When the number of employer candidates satisfying the input data received by the request input reception unit 221 is less than the specified number, the first manufacturer information display unit 22b preferably displays all of the employer candidates satisfying the input data received by the request input reception unit 221.

The user can select at least one of the employer candidates displayed by the first manufacturer information display unit 22b. **In** response to the user selecting an employer candidate, the first input information is input to the first additional information input unit 22c. The user may select one employer candidate or a plurality of employer candidates among the employer candidates displayed by the first manufacturer information display unit 22b. **In** the present embodiment, the user selects one of the employer candidates displayed by the first manufacturer information display unit 22b. However, this is not limiting, and the user may select a plurality of employer candidates.

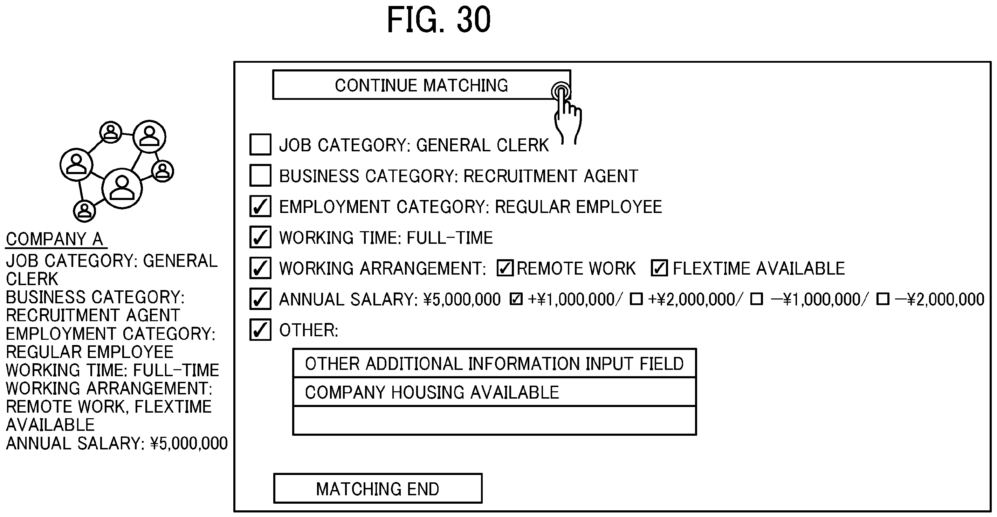

FIG. 30 is a diagram illustrating an example of an employer candidate search process based on a second search process performed in the human resources matching service according to the first embodiment. In the second search process, at least one employer candidate (e.g., Company A) is selected from among the employer candidates found in the first search process, and the first additional information (e.g., job category, business category, employment category, working time, working arrangement, annual salary, and other information) is input to the first additional information input unit 22c based on the selection result. In the second search process, furthermore, the second relevance calculation unit 22d searches for an employer candidate based on the selected employer candidate and the first additional information. At this time, when Company A is determined to be the best and the matching end button is pressed, the search termination input acceptance unit 22m accepts the selection of the termination of the employer search. If the matching end button is not pressed, in the second search process, the second manufacturer information display unit 22e displays the selected employer candidate and employer candidates found based on the first additional information (e.g., Companies E to G). In the present embodiment, at least one employer candidate (e.g., Company A) selected from among the employer candidates found in the first search process may be displayed together with the employer candidates (e.g., Companies E to G) found based on the selected employer candidate and the first additional information in the second search process. The candidate selected in the previous search process is displayed as a candidate in the next search process and is selectable. This enables the employer candidates obtained based on the first additional information to be visually compared with, as a reference, the candidate selected by the user in the previous search process. The present embodiment has the configuration as described above from the viewpoint of displaying a reference and a comparison target for the user to select an employer candidate. However, it is possible to select as appropriate whether to use this configuration.

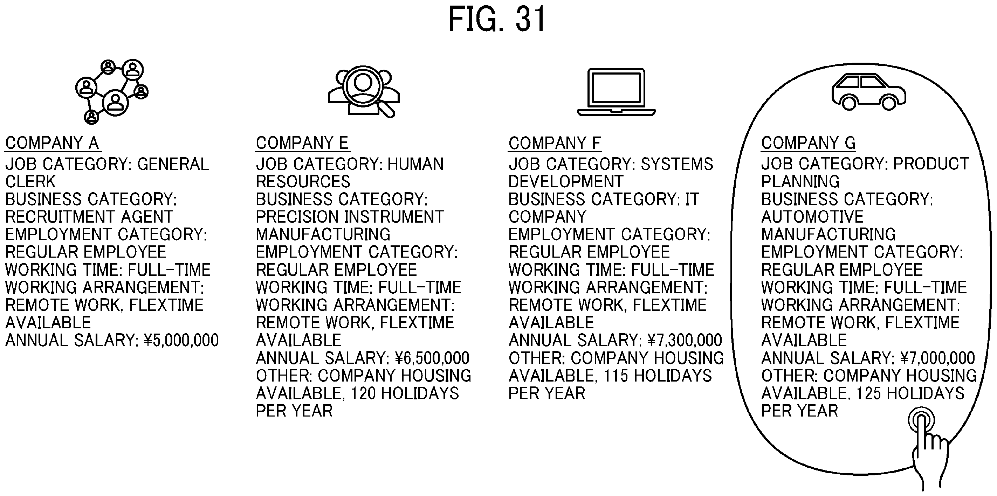

FIG. 31 is a diagram illustrating an example of the employer candidate search process based on the second search process performed in the human resources matching service according to the first embodiment. In the second search process, as illustrated in FIG. 31, at least one employer candidate (e.g., Company G) is selected from among the employer candidates found in the first search process, and the first additional information (e.g., job category, business category, employment category, working time, working arrangement, annual salary, and company housing available) is input to the first additional information input unit 22c based on the selection result. In the second search process, furthermore, the second relevance calculation unit 22d searches for an employer candidate based on the selected employer candidate and the first additional information. At this time, when Company G is determined to be the best and the matching end button is pressed, the search termination input acceptance unit 22m accepts the selection of the termination of the employer search.

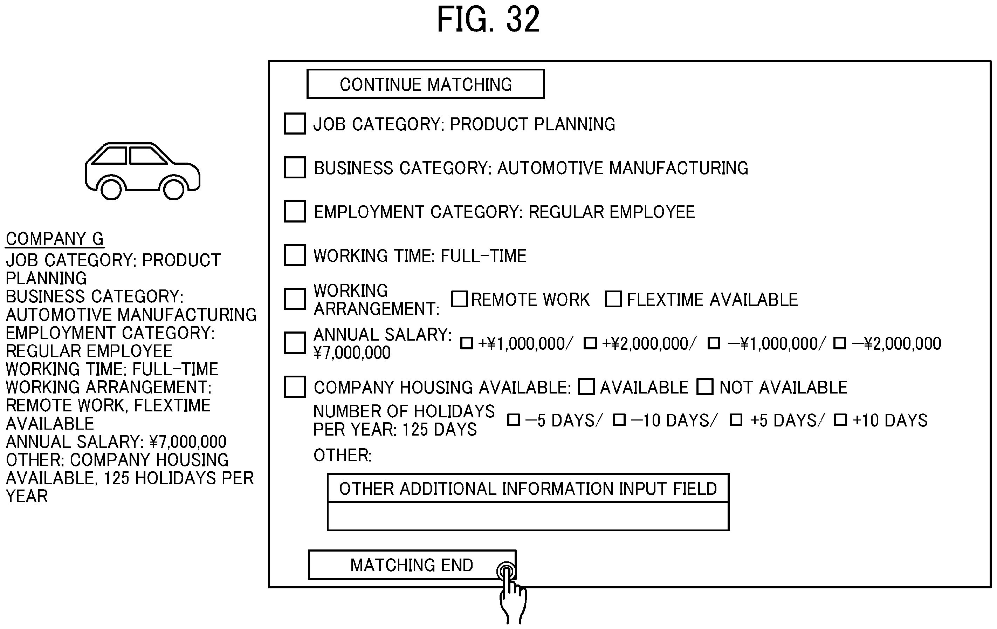

FIG. 32 is a diagram illustrating an example of an employer candidate search process based on the third search process performed in the human resources matching service according to the first embodiment. In the third search process, an employer candidate (e.g., Company G) is selected from among the employer candidates found in the second search process, and, as illustrated in FIG. 32, the second additional information (e.g., job category, business category, employment category, working time, working arrangement, annual salary, and company housing available) is input to the second additional information input unit 22f.

If the matching end button is not pressed, in the third search process, the third relevance calculation unit 22g searches employer candidates based on the selected employer candidate and the second additional information. After that, the manufacturer selection unit 22j selects an employer from among the employer candidates displayed by the third manufacturer information display unit 22h. Then, when the selected employer is determined to be the best and the matching end button is pressed, the search termination input acceptance unit 22m accepts the selection of the termination of the employer search. After the matching end button is pressed and the selection of the termination of the search is accepted, the user may be guided to a page to send a message to the selected employer candidate. This configuration enables the matching operation and the message sending operation to be associated with each other. In the present embodiment, the user selects one of the employer candidates. In another embodiment, the user may select a plurality of employer candidates.

The aspects of the present disclosure are as follows, for example.

In a first aspect, a search system for selecting a contractor that matches a request from a user includes an input reception unit, a first search target information display unit, and a first additional information input unit. The input reception unit receives input data including the request. The first search target information display unit displays, as search target information, one or more search target candidates satisfying a search condition among search targets. The one or more search target candidates are obtained by searching a database of the search targets in the search system by using the input data received by the input reception unit as the search condition. The first additional information input unit receives, as an input, first additional information based on first input information of the one or more search target candidates displayed by the first search target information display unit. The first additional information includes an additional search condition different according to a search target candidate selected from among the one or more search target candidates.

According to a second aspect, the search system of the first aspect further includes a first relevance calculation unit. The first relevance calculation unit extracts search target candidates satisfying the search condition from among the search targets. The first search target information display unit displays, as the search target information, fewer search target candidates than the number of search target candidates extracted by the first relevance calculation unit among the search target candidates extracted by the first relevance calculation unit.

According to a third aspect, in the search system of the first aspect or the second aspect, the first search target information display unit displays all of the one or more search target candidates as the search target information.

According to a fourth aspect, in the search system of the first aspect or the second aspect, in a case where the number of the one or more search target candidates is greater than a predetermined number, the first search target information display unit displays, as the search target information, fewer search target candidates than the number of the one or more search target candidates.

According to a fifth aspect, in the search system of the fourth aspect, in a case where the number of the one or more search target candidates is less than the predetermined number, the first search target information display unit displays all of the one or more search target candidates as the search target information.

According to a sixth aspect, in the search system of any one of the first aspect, the second aspect, the fourth aspect, and the fifth aspect, the first search target information display unit displays, as the search target information, a search target candidate that differs in at least one of conditions that the one or more search target candidates have among the one or more search target candidates.

According to a seventh aspect, in the search system of the second aspect, the first search target information display unit displays a plurality of less relevant search target candidates among the search target candidates extracted by the first relevance calculation unit.

According to an eighth aspect, in the search system of the second aspect, the first input information includes a result of selecting a search target candidate from among the search target candidates extracted by the first relevance calculation unit, and a ranking of the search target candidates extracted by the first relevance calculation unit.

According to a ninth aspect, in the search system of the eighth aspect, the result includes one search target candidate selected from among the search target candidates extracted by the first relevance calculation unit.

According to a tenth aspect, the search system of any one of the first aspect to the ninth aspect further includes a second relevance calculation unit, a second search target information display unit, a second additional information input unit, a third relevance calculation unit, and a third search target information display unit. The second relevance calculation unit extracts search target candidates satisfying the first additional information received by the first additional information input unit from among the search targets. The second search target information display unit displays relevant search target candidates among the search target candidates extracted by the second relevance calculation unit. The second additional information input unit receives, as an input, second additional information based on second input information of the search target candidates displayed by the second search target information display unit. The second additional information includes an additional search condition or a feature word. The third relevance calculation unit extracts search target candidates satisfying the second additional information received by the second additional information input unit from among the search targets. The third search target information display unit displays relevant search target candidates among the search target candidates extracted by the third relevance calculation unit.

According to an eleventh aspect, in the search system of the tenth aspect, the second search target information display unit displays at least one of the one or more search target candidates displayed by the first search target information display unit.

According to a twelfth aspect, the search system of the tenth aspect or the eleventh aspect further includes a search termination input acceptance unit. The search termination input acceptance unit accepts selection of termination of a search through the search targets, in addition to the first additional information input unit and the second additional information input unit.

According to a thirteenth aspect, in the search system of any one of the tenth aspect to the twelfth aspect, the second input information includes a result of selecting a search target candidate from among the search target candidates extracted by the second relevance calculation unit, and a ranking of the search target candidates extracted by the second relevance calculation unit.

According to a fourteenth aspect, in the search system of any one of the tenth aspect to the twelfth aspect, the second search target information display unit displays all of the relevant search target candidates among the search target candidates extracted by the second relevance calculation unit.

According to a fifteenth aspect, in the search system of any one of the tenth aspect to the fourteenth aspect, the third search target information display unit displays all of the relevant search target candidates among the search target candidates extracted by the third relevance calculation unit.

According to a sixteenth aspect, the search system of any one of the eleventh aspect to the fifteenth aspect further includes a fourth search target information display unit. The fourth search target information display unit displays, for all of the relevant search target candidates among the search target candidates extracted by the third relevance calculation unit, registered additional information of search targets corresponding to the relevant search target candidates. The additional information displayed by the fourth search target information display unit includes content related to the input data received by the input reception unit.

According to a seventeenth aspect, the search system of any one of the tenth aspect to the sixteenth aspect further includes a search target selection unit and a contact unit. The search target selection unit selects a search target from among the search target candidates displayed by the third search target information display unit. The contact unit allows the user to contact the search target selected by the search target selection unit.

According to an eighteenth aspect, in the search system of the seventeenth aspect, the search target include a contractor, the request includes a job requested by the user, and a requirement for the contractor involved in the requested job, and the contact unit notifies the contractor selected by the search target selection unit that the user has determined to make the request.

In a nineteenth aspect, a program causes a computer included in a search system for selecting a search target that matches a request from a user to function as an input reception unit, a first search target information display unit, and a first additional information input unit. The input reception unit receives input data including the request. The first search target information display unit displays, as search target information, one or more search target candidates satisfying a search condition among search targets. The one or more search target candidates are obtained by searching a database of the search targets in the search system by using the input data received by the input reception unit as the search condition. The first additional information input unit receives, as an input, first additional information based on first input information of the one or more search target candidates displayed by the first search target information display unit. The first additional information includes an additional search condition different according to a search target candidate selected from among the one or more search target candidates.

In a twentieth aspect, a search method executed by a search system for selecting a search target that matches a request from a user includes receiving input data including the request; displaying, as search target information, one or more search target candidates satisfying a search condition among search targets, the one or more search target candidates being obtained by searching a database of the search targets in the search system by using the received input data as the search condition; and receiving, as an input, first additional information based on first input information of the displayed one or more search target candidates, the first additional information including an additional search condition different according to a search target candidate selected from among the one or more search target candidates.

In a twenty-first aspect, a customer selection system for allowing a contractor to select a customer that matches an order received by the contractor includes a received order content input reception unit, a first customer information display unit, and a first additional information input unit. The received order content input reception unit receives input data including a requirement for the received order. The first customer information display unit displays, as customer information, one or more customer candidates satisfying a search condition among customers. The one or more customer candidates are obtained by searching a database of the customers in the customer selection system by using the input data received by the received order content input reception unit as the search condition. The first additional information input unit receives, as an input, first additional information based on first input information of the one or more customer candidates displayed by the first customer information display unit. The first additional information includes an additional search condition different according to a customer candidate selected from among the one or more customer candidates.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A search system (100) comprising:
an input reception unit (22l) configured to receive input data including a request from a user;
a first search target information display unit (22b) configured to display, as search target information, one or more search target candidates satisfying a search condition among search targets, the one or more search target candidates being acquired by searching a database of the search targets in the search system (20) by using the received input data as the search condition; and
a first additional information input unit (22c) configured to receive, as an input, first additional information based on first input information of the one or more search target candidates, the first additional information including an additional search condition that differs according to a search target candidate selected from among the one or more search target candidates.

2. The search system (100) according to claim 1, further comprising
a first relevance calculation unit (22a) configured to extract search target candidates satisfying the search condition from among the search targets, wherein
the first search target information display unit (22b) is configured to display, as the search target information, fewer search target candidates than the number of extracted search target candidates among the extracted search target candidates.

3. The search system (100) according to claim 1 or 2, wherein
the first search target information display unit (22b) is configured to display all of the one or more search target candidates as the search target information.

4. The search system (100) according to claim 1 or 2, wherein
in a case where the number of the one or more search target candidates is greater than a predetermined number, the first search target information display unit (22b) is configured to display, as the search target information, fewer search target candidates than the number of the one or more search target candidates.

5. The search system (100) according to claim 4, wherein
in a case where the number of the one or more search target candidates is less than the predetermined number, the first search target information display unit (22b) is configured to display all of the one or more search target candidates as the search target information.

6. The search system (100) according to claim 1, 2, 4, or 5, wherein
the first search target information display unit (22b) is configured to display, as the search target information, a search target candidate that differs in at least one of conditions that the one or more search target candidates have among the one or more search target candidates.

7. The search system (100) according to claim 2, wherein
the first search target information display unit (22b) is configured to display a plurality of less relevant search target candidates among the extracted search target candidates.

8. The search system (100) according to claim 2, wherein
the first input information includes a result of selecting a search target candidate from among the extracted search target candidates, and a ranking of the extracted search target candidates.

9. The search system (100) according to claim 8, wherein
the result includes one search target candidate selected from among the extracted search target candidates.

10. The search system (100) according to any one of claims 1 to 9, further comprising:
a second relevance calculation unit (22d) configured to extract search target candidates satisfying the received first additional information from among the search targets;
a second search target information display unit (22e) configured to display relevant search target candidates among the search target candidates extracted by the second relevance calculation unit (22d);
a second additional information input unit (22f) configured to receive, as an input, second additional information based on second input information of the search target candidates displayed by the second search target information display unit (22e), the second additional information including an additional search condition or a feature word;
a third relevance calculation unit (22g) configured to extract search target candidates satisfying the second additional information received by the second additional information input unit (22f) from among the search targets; and
a third search target information display unit (22h) configured to display relevant search target candidates among the search target candidates extracted by the third relevance calculation unit (22g).

11. The search system (100) according to claim 10, wherein
the second search target information display unit (22e) is configured to display at least one of the one or more search target candidates displayed by the first search target information display unit (22b).

12. The search system (100) according to claim 10 or 11, further comprising
a search termination input acceptance unit (22m) configured to accept selection of termination of a search through the search targets.

13. The search system (100) according to any one of claims 10 to 12, wherein
the second input information includes a result of selecting a search target candidate from among the search target candidates extracted by the second relevance calculation unit (22d), and a ranking of the search target candidates extracted by the second relevance calculation unit (22d).

14. The search system (100) according to any one of claims 10 to 12, wherein
the second search target information display unit (22e) is configured to display all of the relevant search target candidates among the search target candidates extracted by the second relevance calculation unit (22d).

15. The search system (100) according to any one of claims 10 to 14, wherein
the third search target information display unit (22h) is configured to display all of the relevant search target candidates among the search target candidates extracted by the third relevance calculation unit (22g).

16. The search system (100) according to any one of claims 11 to 15, further comprising
a fourth search target information display unit (22i) configured to display, for all of the relevant search target candidates among the search target candidates extracted by the third relevance calculation unit (22g), registered additional information of search targets corresponding to the relevant search target candidates, wherein
the additional information displayed by the fourth search target information display unit (22i) includes content related to the input data received by the input reception unit (22l).

17. The search system (100) according to any one of claims 10 to 16, further comprising:
a search target selection unit (22j) configured to select a search target from among the search target candidates displayed by the third search target information display unit (22h); and
a contact unit (22k) configured to allow the user to contact the search target selected by the search target selection unit (22j).

18. The search system (100) according to claim 17, wherein
the search target include a contractor,
the request includes a job requested by the user, and a requirement for the contractor involved in the requested job, and
the contact unit (22k) is configured to notify the contractor selected by the search target selection unit (22j) that the user has determined to make the request.

19. A search method comprising:
receiving input data including a request from a user;
displaying, as search target information, one or more search target candidates satisfying a search condition among search targets, the one or more search target candidates being acquired by searching a database of the search targets in a search system by using the received input data as the search condition; and
receiving, as an input, first additional information based on first input information of the one or more search target candidates, the first additional information including an additional search condition that differs according to a search target candidate selected from among the one or more search target candidates.

20. Carrier means carrying computer readable code for controlling a computer system to carry out the method of claim 19.
